(19) Europäisches Patentamt
European Patent Office
Office européen des brevets

(11) EP 3 824 012 B1

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **19739302.8**

(22) Anmeldetag: **17.07.2019**

(51) Internationale Patentklassifikation (IPC):
***C08G 18/76*** *(2006.01)* ***C08G 18/00*** *(2006.01)*

(52) Gemeinsame Patentklassifikation (CPC):
**C08G 18/003; C08G 18/7621; C08G 18/7671**

(86) Internationale Anmeldenummer:
**PCT/EP2019/069202**

(87) Internationale Veröffentlichungsnummer:
**WO 2020/016276 (23.01.2020 Gazette 2020/04)**

(54) **BULKPOLYMERISIERUNG VON POLYOXAZOLIDON**

BULK POLYMERISATION OF POLYOXAZOLIDONE

POLYMÉRISATION EN VRAC DE POLYOXAZOLIDONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2018 EP 18184167**

(43) Veröffentlichungstag der Anmeldung:
**26.05.2021 Patentblatt 2021/21**

(73) Patentinhaber: **BASF SE**
**67056 Ludwigshafen am Rhein (DE)**

(72) Erfinder:
- **DESBOIS, Philippe**
**67056 Ludwigshafen am Rhein (DE)**
- **THOMAS, Hans-Josef**
**67056 Ludwigshafen am Rhein (DE)**

(74) Vertreter: **BASF IP Association**
**BASF SE**
**GBI-C006**
**67056 Ludwigshafen (DE)**

(56) Entgegenhaltungen:
**US-A1- 2015 291 726** **US-A1- 2017 088 659**
**US-A1- 2018 051 119**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 824 012 B1

## Beschreibung

Die vorliegende Erfindung betrifft ein Verfahren zur Herstellung eines thermoplastischen Polymers durch Umsetzung mindestens der Komponenten (i) bis (ii): eine Polyisocyanatzusammensetzung umfassend mindestens ein Diisocyanat (i); eine Epoxidzusammensetzung umfassend mindestens ein Diepoxid (ii); in Gegenwart einer Katalysatorzusammensetzung (iii); wobei bei einer Temperatur in einem ersten Temperaturbereich ($T_1$) Epoxidzusammensetzung (ii) und Katalysatorzusammensetzung (iii) in Mischung vorgelegt werden (a); unter Beibehaltung einer Temperatur im ersten Temperaturbereich $T_1$ zumindest anteilig die Polyisocyanatzusammensetzung (i) zugegeben wird (b); die Temperatur auf eine Temperatur in einem finalen Temperaturbereich ($T_f$) erhöht wird (c); und im finalen Temperaturbereich die Zugabe der verbliebenen Polyisocyanatzusammensetzung (i) erfolgt (d). Das derart erhaltene thermoplastische Polymer auf der Basis von Diisocyanat und Diepoxid wird auch als Polyoxazolidon bezeichnet.

Die Herstellung von Polyoxazolidonen auf Basis von Diisocyanat und Diepoxid ist grundsätzlich bekannt. Dabei ist meist der Fokus auf vernetzte Strukturen gerichtet, wie sie beispielsweise in der DE 10 2014 226 838 A1 erwähnt werden. Dabei treten ausgehend vom Isocyanat und Epoxid eine Reihe von Nebenreaktionen auf, die sich nachteilig auf die thermoplastischen Eigenschaften der Polyoxozolidone auswirken.

Die Synthese linearer Polyoxazolidone wird in den Dokumenten WO 2015/173111 A1, WO 2015/173110 A1, US 2014/0121299 und WO 2014/076024 A1 beschrieben. Problematisch war es allerdings, thermoplastische Polyoxazolidone bereitzustellen, bei denen die Nebenreaktionen nur in geringem Maße auftreten, um so die Eigenschaften, insbesondere auch die thermoplastischen Eigenschaft des Polyoxazolidons nicht nachteilig zu beeinflussen. Eine Möglichkeit zur Verbesserung der Produkteigenschaften, insbesondere auch der thermoplastischen Eigenschaft von Polyoxazolidonen, wurde dadurch geschaffen, dass das Polyoxazolidon mit einem geeigneten Katalysator, der auch im Endprodukt vorhanden sein kann, hergestellt wurde - der Katalysator war hierbei gemäß der PCT/EP2018/053612 eine ionische Flüssigkeit. Gemäß der PCT/EP2018/053612 erfolgt die Synthese in dem beispielsweise in einem ersten Schritt das Epoxid und der Katalysator in einem Lösungsmittel aufgelöst und auf Reaktionstemperatur erhitzt werden, wobei die Reaktionstemperatur bevorzugt in einem Bereich von 140 °C bis 220 °C liegt. Unter Schutzgas wird dann das Isocyanat unter Aufrechterhaltung der Reaktionstemperatur langsam zudosiert. Mittels des beschriebenen Verfahrens werden lineare Polyoxazolidone erhalten, wobei es sich allerdings herausgestellt hat, dass die erhaltenen Polymere erhöhte Polydispersität aufweisen, weiterhin war die Aufarbeitung des Polymers aufwendiger, beispielsweise waren Lösungsmittelreste nur aufwendig zu entfernen.

Aufgabe der vorliegenden Erfindung war somit die Bereitstellung eines Herstellungsverfahrens, mit welchem die oben genannten Nachteile vermieden werden können, insbesondere sollten höhere Molekulargewichte und geringere Polydispersitäten erreicht werden, wobei bevorzugt ohne den Einsatz von Lösungsmitteln gearbeitet werden sollte.

Die Aufgabe wird gelöst mit einem Verfahren zur Herstellung eines thermoplastischen Polymers durch Umsetzung mindestens der Komponenten (i) bis (ii)

i) eine Polyisocyanatzusammensetzung umfassend mindestens ein Diisocyanat;
ii) eine Epoxidzusammensetzung umfassend mindestens ein Diepoxid; in Gegenwart einer Katalysatorzusammensetzung (iii); wobei

a) bei einer Temperatur in einem ersten Temperaturbereich ($T_1$) Epoxidzusammensetzung (ii) und Katalysatorzusammensetzung (iii) in Mischung vorgelegt werden;
b) unter Beibehaltung einer Temperatur im ersten Temperaturbereich $T_1$ zumindest anteilig die Polyisocyanatzusammensetzung (i) zugegeben wird;
c) die Temperatur auf eine Temperatur in einem finalen Temperaturbereich ($T_f$) erhöht wird;
d) im finalen Temperaturbereich die Zugabe der verbliebenen Polyisocyanatzusammensetzung (i) erfolgt.

Die erhaltenen Polymere (Polyoxazolidone) weisen ein höheres Molekulargewicht, sowohl im Hinblick auf $M_n$ als auch $M_w$, sowie eine niedrigere Polydispersität auf. Insbesondere ist die zahlenmittlere Molmasse $M_n$ größer als 10000 g/mol und die Polydispersität ist kleiner 4.

### Temperaturbereiche

Gemäß (c) wird die Temperatur auf eine Temperatur in einem finalen Temperaturbereich ($T_f$) erhöht. Bevorzugt umfasst der finale Temperaturbereich $T_f$ einen zweiten Temperaturbereich Bereich $T_2$ und einen dritten Temperaturbereich $T_3$, wobei der dritte Temperaturbereich $T_3$ oberhalb des zweiten Temperaturbereichs $T_2$ liegt und der zweite Temperaturbereich $T_2$ oberhalb des ersten Temperaturbereichs $T_1$ liegt. Bevorzugt liegt der finale Temperaturbereich $T_f$ bei >180 bis 250°C, bevorzugt >170 bis 250 °C, weiter bevorzugt >165 bis 250 °C, wobei bevorzugt der zweite Temperaturbereich $T_2$ >180 bis 200 °C, bevorzugt >170 bis 200 °C, weiter bevorzugt >165 bis 200 °C, und der dritte

Temperaturbereich $T_3$ >200 bis 250 °C, bevorzugt >200 bis 230 °C, beträgt.

Gemäß (a) werden bei einer Temperatur in einem ersten Temperaturbereich ($T_1$) Epoxidzusammensetzung (ii) und Katalysatorzusammensetzung (iii) in Mischung vorgelegt. Bevorzugt beträgt der erste Temperaturbereich $T_1$ 140 bis 180 °C, bevorzugt 150 bis 170 °C, weiter bevorzugt 155 bis 165 °C.

Gemäß (b) wird unter Beibehaltung einer Temperatur im ersten Temperaturbereich $T_1$ zumindest anteilig die Polyisocyanatzusammensetzung (i) zugegeben. Bevorzugt werden im ersten Temperaturbereich $T_1$ gemäß (b) 80 bis 95 Gewichts-% der Polyisocyanatzusammensetzung (i), bezogen auf die Gesamtmenge der Polyisocyanatzusammensetzung (i), zugegeben.

"Unter Beibehaltung einer Temperatur im ersten Bereich T1" bedeutet, dass die Temperatur um bis zu +/- 10 °C, bevorzugt um +/- 5 °C, weiter bevorzugt um +/- 3 °C, von der in (a) eingestellten Temperatur abweichen kann, wobei trotzdem eine Einhaltung des Temperaturbereichs T1 vorliegt, d.h. die Temperatur bleibt im Schritt (b) bevorzugt im Temperaturbereich $T_1$ von140 bis 180 °C, bevorzugt im Bereich von 150 bis 170 °C, weiter bevorzugt im Bereich von 155 bis 165 °C.

Gemäß (d) erfolgt im finalen Temperaturbereich die Zugabe der verbliebenen Polyisocyanatzusammensetzung (i). Bevorzugt werden im finalen Temperaturbereich $T_f$ 5 bis 20 Gewichts-% der Polyisocyanatzusammensetzung (i), bezogen auf die Gesamtmenge der Polyisocyanatzusammensetzung (i), zugegeben, wobei bevorzugt im zweiten Temperaturbereich $T_2$ 5 bis 20 Gewichts-% der Polyisocyanatzusammensetzung (i), und im dritten Temperaturbereich $T_3$ optional 0 bis 10 Gewichts-%, bevorzugt 0 Gewichts-%, der Polyisocyanatzusammensetzung (i), jeweils bezogen auf die Gesamtmenge der Polyisocyanatzusammensetzung (i), zugegeben werden.

Die Zugabe der Polyisocyanatzusammensetzung (i) in (b) und (d) ist keinen Beschränkungen unterlaufen, sie kann kontinuierlich mit gleicher Menge / Zeit, kontinuierlich mit variierender Menge / Zeit oder diskontinuierlich erfolgen. Bevorzugt erfolgt die Zugabe der Polyisocyanatzusammensetzung (i) in (b) und (d) kontinuierlich mit gleicher Menge/Zeit.

## Polyisocyanatzusammensetzung

Gemäß (i) umfasst die Polyisocyanatzusammensetzung mindestens ein Diisocyanat.

Vorliegend wird als mindestens ein Diisocyanat sowohl eine einzige Substanz als auch eine Mischung von Substanzen verstanden, die bevorzugt aus der nachfolgenden Aufzählung ausgewählt ist. Die Diisocyanate sind ausgewählt aus der Gruppe der aliphatischen, cycloaliphatischen, araliphatischen und aromatischen Isocyanate, die weiter bevorzugt ausgewählt sind aus der Gruppe Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4-und/oder-2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat, 4,4'-, 2,4'- und 2,2'-Dicyclohexylmethan-diisocyanat (H12 MDI), 2,4-Paraphenylendiisocynat (PPDI), 2,4-Tetramethylenxylendiisocyant (TMXDI). Bevorzugt sind aromatische Diisocyanate, die aus der obigen Liste ausgewählt sind. Weiter bevorzugt ist das Isocyant ausgewählt aus der Gruppe Toluylendiisocyanat (TDI), Diphenylmethandiisocyanat (MDI) und 1,5-Naphthylendiisocyanat (NDI). Ganz besonders bevorzugt sind Toluylendiisocyanat (TDI) oder Diphenylmethandiisocyanat (MDI).

Gemäß einer Ausführungsform enthält die Polyisocyanatzusammensetzung (i) kein Isocyanat mit einer Funktionalität größer 2,0. Dies bedeutet, dass die Polyisocyanatzusammensetzung (i) nur Diisocyanate mit einer Funktionalität von 2,0 enthält, wobei dies bevorzugt Diisocyanate mit einer Funktionalität im Bereich von 1,95 bis 2,05, umfasst. Weiter bevorzugt besteht die Polyisocyanatzusammensetzung (i) zu mindestens 98 Gewichts-%, aus dem mindestens einen Diisocyanat, jeweils bezogen auf das Gesamtgewicht der Polyisocyanatzusammensetzung (i).

Die Bestimmung des Gehalts an Isocyanatgruppen erfolgt gemäß DIN EN ISO 14896.

## Epoxidzusammensetzung

Gemäß (ii) umfasst die Epoxidzusammensetzung mindestens ein Diepoxid.

Vorliegend wird als mindestens ein Diepoxid sowohl eine einzige Substanz als auch eine Mischung von Substanzen verstanden. Bevorzugt enthält die Epoxidzusammensetzung (ii) kein Epoxid mit einer Funktionalität größer 2,0. Dies bedeutet, dass die Epoxidzusammensetzung (ii) nur Diepoxide mit einer Funktionalität von 2,0 enthält, wobei dies bevorzugt Diepoxide mit einer Funktionalität im Bereich von 1,95 bis 2,05, umfasst. In einer bevorzugten Ausführungsform besteht die Epoxidzusammensetzung (ii) zu mindestens 98 Gewichts-% aus dem mindestens einen Diepoxid, jeweils bezogen auf das Gesamtgewicht der Epoxidzusammensetzung (ii)

Diese Diepoxide können dabei sowohl gesättigt als auch ungesättigt, aliphatisch, cycloaliphatisch, aromatisch oder heterocyclisch sein. Sie können weiterhin solche Substituenten enthalten, die unter den Reaktionsbedingungen

keine störenden Nebenreaktionen verursachen, beispielsweise Alkyl- oder Arylsubstituenten, Ethergruppierungen und dergleichen.

Vorzugsweise handelt es sich bei den Diepoxiden um Polyglycidylether auf der Basis von zweiwertigen Alkoholen, Phenolen, Hydrierungsprodukten dieser Phenole und/oder von Novolacken. Novolacke sind Umsetzungsprodukte von Phenolen mit Aldehyden, insbesondere Formaldehyd, in Gegenwart saurer Katalysatoren, besonders bevorzugt sind dabei die Diglycidylether. Möglich sind jedoch auch Diepoxide auf Basis von anderen Strukturen, welche keine Ethergruppen enthalten.

Andere bevorzugte Diepoxide basieren auf Diglycidylethern von natürlichen Rohstoffen, bevorzugt Cardanol. Ein typisches Beispiel für ein solches Produkt ist Cardolite NC 514 (Fa. Cardolite). Der Vorteil dieses Epoxids ist die längere Alkylkette zwischen den Aromaten die zu einer höheren Flexibilität der daraus hergestellten Polymere führt. Besonders wirken sich die Vorzüge von aliphatischen Strukturelementen in Kombination mit aromatischen Diglycidylethern aus. Daher sind Diepoxide basierend auf aliphatischen Diglycidylethern in Kombination mit aromatischen Diglycidylethern besonders bevorzugt.

Die Epoxidäquivalentgewichte dieser Epoxidverbindungen liegen vorzugsweise zwischen 100 und 5000, insbesondere zwischen 150 und 500. Das Epoxidäquivalentgewicht einer Substanz ist dabei als diejenige Menge der Substanz (in Gramm) definiert, welche 1 Mol Oxiranringe enthält. Zur Charakterisierung des Gehalts von Verbindungen an Oxirangruppen ("Epoxidgruppen") wird üblicherweise eine Epoxidtitration mit einer 0,1-N Lösung von Perchlorsäure in Eisessig durchgeführt (vgl. DIN EN ISO 3001). Die dabei erhaltene Epoxidzahl (%EpO) gibt an, wieviel Gramm Oxiran-Sauerstoff in 100 Gramm einer Probe enthalten sind. Als Indikator setzt man Kristallviolett ein. Die Bestimmung setzt die Abwesenheit von Wasser, Basen und Aminen voraus. Aus dem Verbrauch an ml 0,1N Perchlorsäure bei der Titration (x), dem Verbrauch an ml 0,1N Perchlorsäure bei der Blindprobe (y) und der Einwage der zu untersuchenden Probe in Gramm (E) wird der Epoxidgehalt %EpO wird wie folgt berechnet: % EpO=[(x-y)+0,160]/ E. Das Epoxid-Äquivalentgewicht (EEW) errechnet sich daraus wiederum nach der folgenden Formel: EEW = 1600 / % EpO, wobei die Dimension des EEW g/äq ist.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxybenzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon, sowie die Chlorierungs- und Bromierungsprodukte der vorstehend genannten Verbindungen; Bisphenol A ist dabei ganz besonderes bevorzugt. Handelsübliche Produkte für Bisphenol A-Diglycidylether sind beispielsweise DER 332, DER 331, oder DER 330 der Fa. DOW U.S.A. oder Epilox A18-00 der Firma Leuna Harze, Deutschland.

<u>Katalysator</u>

Polyisocyanatzusammensetzung gemäß (i) und Epoxidzusammensetzung gemäß (ii) werden in Gegenwart einer Katalysatorzusammensetzung (iii) umgesetzt.

Die für die Herstellung des thermoplastischen Polymers verwendeten Katalysatoren sind bevorzugt ionische Flüssigkeiten. Ionische Flüssigkeiten sind organische Salze, deren Ionen durch Ladungsdelokalisierung und sterische Effekte die Bildung eines stabilen Kristallgitters behindern. Bereits geringe thermische Energie genügt daher, um die Gitterenergie zu überwinden und die feste Kristallstruktur aufzubrechen.

Bevorzugt sind die Kationen der ionischen Flüssigkeit alkyliert und weiter bevorzugt aus der folgenden Gruppe ausgewählt: Imidazolium, Pyridinium, Pyrrolidinium, Guanidinium, Uronium, Thiouronium, Piperidinium, Morpholinium, Ammonium und Phosphonium. Bevorzugt sind die Anionen in der ionischen Flüssigkeit Halogenide oder komplexe Ionen, die bevorzugt ausgewählt sind aus der Gruppe: Tetrafluoroborat, Trifluoracetat, Triflat, Hexafluorophosphat, Phosphinat und Tosylat. In einer anderen bevorzugten Ausführungsform sind die Anionen organische Ionen, bevorzugt Imide oder Amide.

Ionische Flüssigkeiten im Sinne der vorliegenden Erfindung sind vorzugsweise Salze der allgemeinen Formel

(A) Salze der allgemeinen Formel (I) $[A]^{+}_{n}\ [Y]^{n-}$ (I),

in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht; oder

(B) gemischte Salze der allgemeinen Formeln (II)

$[A^1]^+[A^2]^+\ [Y]^{n-}$ (IIa), wobei n = 2;

$[A^1]^+[A^2]^+[A^3]^+\ [Y]^{n-}$ (IIb), wobei n = 3; oder

$[A^1]^+[A^2]^+[A^3]^+[A^4]^+\ [Y]^{n-}$ (IIc), wobei n = 4 und

wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die unter (A) genannte Bedeutung besitzt; oder

(C) gemischte Salze der allgemeinen Formeln (III)

$[A^1]^+[A^2]^+[A^3]^+[M^1]^+ [Y]^{n-}$ (IIIa), wobei n = 4;

$[A^1]^+[A^2]^+[M^1]^+[M^2]^+ [Y]^{n-}$ (IIIb), wobei n = 4;

$[A^1]^+[M^1]^+[M^2]^+[M^3]^+ [Y]^{n-}$ (IIIc), wobei n = 4;

$[A^1]^+[A^2]^+[M^1]^+ [Y]^{n-}$ (IIId), wobei n = 3;

$[A^1]^+[M^1]^+[M^2]^+ [Y]^{n-}$ (IIIe), wobei n = 3;

$[A^1]^+[M^1]^+ [Y]^{n-}$ (IIIf), wobei n = 2;

$[A^1]^+[A^2]^+[M^4]^{2+} [Y]^{n-}$ (IIIg), wobei n = 4;

$[A^1]^+[M^1]^+[M^4]^{2+} [Y]^{n-}$ (IIIh), wobei n = 4;

$[A^1]^+[M^5]^{3+} [Y]^{n-}$ (IIIi), wobei n = 4; oder

$[A^1]^+[M^4]^{2+} [Y]^{n-}$ (IIIj), wobei n = 3 und

wobei $[A^1]^+$, $[A^2]^+$ und $[A^3]^+$ unabhängig voneinander aus den für $[A]^+$ genannten Gruppen ausgewählt sind, $[Y]^{n-}$ die unter (A) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten.

Verbindungen, die sich zur Bildung des Kations $[A]^+$ von ionischen Flüssigkeiten eignen, sind z. B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Hetero-zyklus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterozyklen beispielsweise quaternisiert sein kann, sind $C_1$-$C_{18}$-Alkyl, bevorzugt $C_1C_{10}$-Alkyl, besonders bevorzugt $C_1$-$C_6$-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterozyklus, insbesondere einen fünfgliedrigen Heterozyklus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterozyklus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterozyklen.

Besonders bevorzugte Verbindungen sind solche, die ein Molgewicht unter 1000 g/Mol aufweisen, ganz besonders bevorzugt unter 500 g/Mol.

Weiterhin sind solche Kationen bevorzugt, die ausgewählt sind aus den Verbindungen der Formeln (IVa) bis (IVx3),

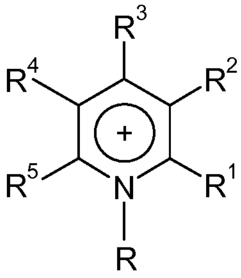
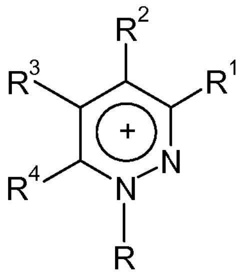
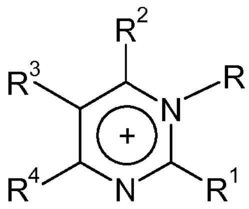

(IVa) (IVb) (IVc)

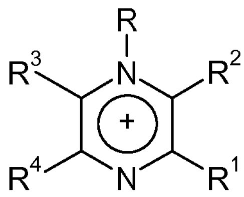
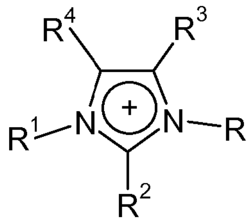
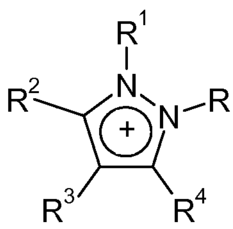

(IVd) (IVe) (IVf)

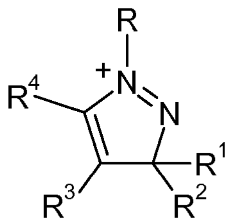
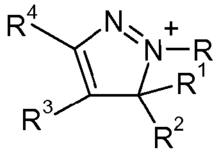
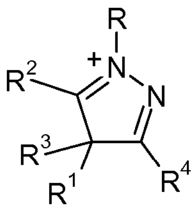

(IVg) (IVg') (IVh)

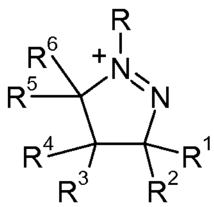
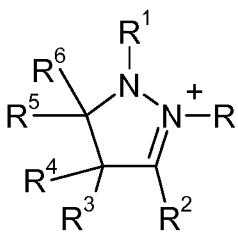
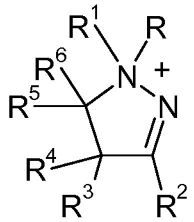

(IVi) (IVj) (IVj')

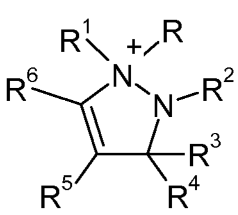 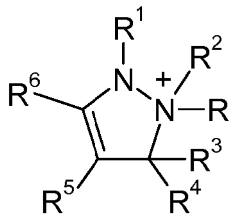 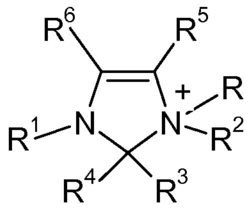

(IVk) (IVk') (IVl)

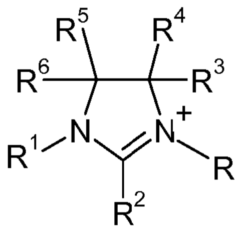 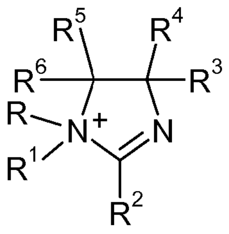 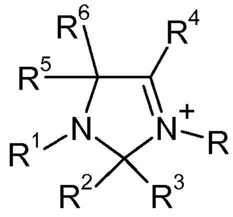

(IVm) (IVm') (IVn)

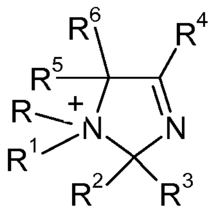 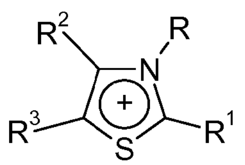 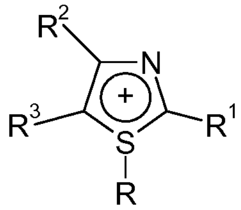

(IVn') (IVo) (IVo')

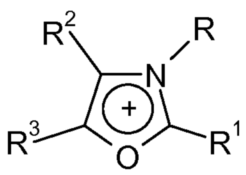 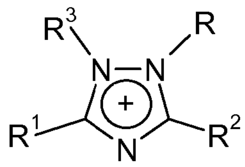 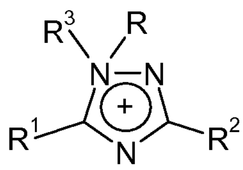

(IVp) (IVq) (IVq')

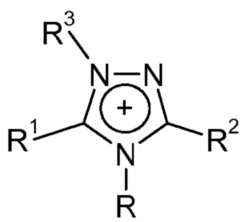 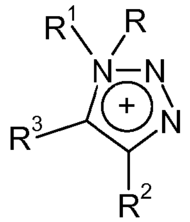 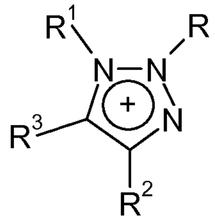

(IVq'') (IVr) (IVr')

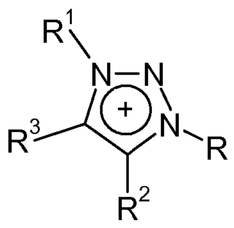 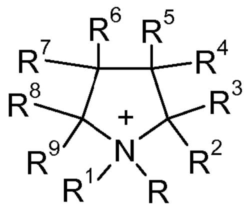 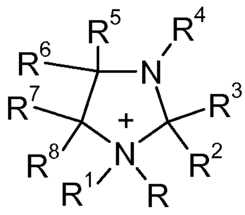

(IVr") (IVs) (IVt)

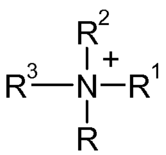 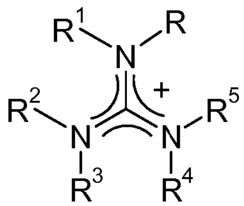 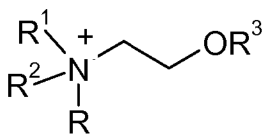 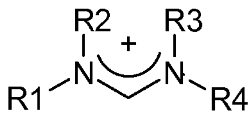

(IVu) (IVv) (IVw) (IVx0)

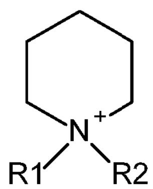 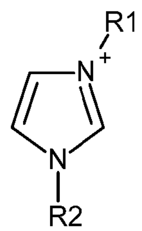 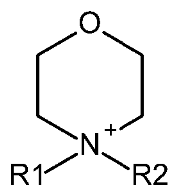

(IVx1) (IVx2) (IVx3)

sowie Oligomere, die diese Strukturen enthalten.

Weitere geeignete Kationen sind Verbindungen der allgemeinen Formel (IVy) und (IVz)

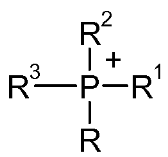 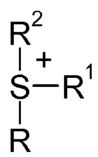

(IVy) (IVz)

sowie Oligomere, die diese Struktur enthalten.

In den oben genannten Formeln (IVa) bis (IVz) stehen

- der Rest R für Wasserstoff, einen Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen; und
- die Reste $R^1$ bis $R^9$ unabhängig voneinander für Wasserstoff, eine Sulfo-Gruppe oder einen Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder

- zwei benachbarte Reste aus der Reihe $R^1$ bis $R^9$ zusammen auch für einen zweibindigen, Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 30 Kohlenstoffatomen.

Als Heteroatome kommen bei der Definition der Reste R und $R^1$ bis $R^9$ prinzipiell alle Heteroatome in Frage, welche in der Lage sind, formell eine $-CH_2-$, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, $-SO_2-$, -NR'-, -N=, -PR'-, $-PR'_2$ und $-SiR'_2-$ genannt, wobei es sich bei den Resten R' um den verbleibenden Teil des Kohlenstoff enthaltenden Rests handelt. Die Reste $R^1$ bis $R^9$ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien - $NR_2'$, und -CN (Cyano) genannt. Funktionelle Gruppen und Heteroatome können auch direkt benachbart sein, so dass auch Kombinationen aus mehreren benachbarten Atomen, wie etwa - O- (Ether), -S- (Thioether), -COO- (Ester), oder-CONR'- (tertiäres Amid), mit umfasst sind, beispielsweise Di-($C_1$-$C_4$-Alkyl)-amino, $C_1$-$C_4$-Alkyloxycarbonyl oder $C_1$-$C_4$-Alkyloxy. Bei den Resten R' handelt es sich um den verbleibenden Teil des Kohlenstoff enthaltenden Restes.

Als bevorzugte Halogene seien Fluor, Chlor, Brom und Iod genannt.

Bevorzugt steht der Rest R für

- unverzweigtes oder verzweigtes, unsubstituiertes oder ein bis mehrfach mit Halogen, Phenyl, Cyano, substituiertes $C_1$-$C_{18}$-Alkyl mit insgesamt 1 bis 20 Kohlen-stoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;
- Glykole, Butylenglykole und deren Oligomere mit 1 bis 100 Einheiten und einem $C_1$-$C_8$-Alkyl als Endgruppe, wie beispielsweise $R^AO-(CHR^B-CH_2-O)_n-CHR^B-CH_2-$ oder $R^A-O-(CH_2CH_2CH_2CH_2O)_n-CH_2CH_2CH_2CH_2O-$ mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl;
- 1-Propen-1-yl, 1-Propen-2-yl und 1-Propen-3-yl; und
- N,N-Di-$C_1$-$C_6$-alkyl-amino, wie beispielsweise N,N-Dimethylamino und N,N-Diethylamino.

Besonders bevorzugt steht der Rest R für unverzweigtes und unsubstituiertes $C_1$-$C_{18}$-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für $CH_3O-(CH_2CH_2O)_n-CH_2CH_2-$ und $CH_3CH_2O-(CH_2CH_2O)_n-CH_2CH_2-$ mit n gleich 0 bis 3.

Bevorzugt stehen die Reste $R^1$ bis $R^9$ unabhängig voneinander für

- Wasserstoff;
- Halogen;
- eine geeignete funktionelle Gruppe;
- gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_1$-$C_{18}$-Alkyl;
- gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl;
- gegebenenfalls durch geeignete funktionelle Gruppen, Aryl, Alkyl, Aryloxy, Alkyl-oxy, Halogen, Heteroatome und/oder Heterozyklen substituiertes $C_6$-$C_{12}$-Aryl;
- gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cyclo-alkyl;

- gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cyclo-alkenyl; oder
- einen gegebenenfalls durch geeignete funktionelle Gruppen, Aryl, Alkyl, Aryloxy, Alkyloxy, Halogen, Heteroatome und/oder Heterozyklen substituierten fünf- bis sechsgliedrigen, Sauerstoff-, Stickstoff- und/oder Schwefelatome aufweisenden Heterozyklus bedeuten; oder zwei benachbarte Reste zusammen mit den Atomen, an welchen sie gebunden sind, für
- einen ungesättigten, gesättigten oder aromatischen, gegebenenfalls durch geeignete funktionelle Gruppen, Aryl, Alkyl, Aryloxy, Alkyloxy, Halogen, Heteroatome und/oder Heterozyklen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch geeignete funktionelle Gruppen, Aryl, Alkyl, Aryloxy, Alkyloxy, Halogen, Heteroatome und/oder Heterozyklen substituiertem $C_1$-$C_{18}$-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethyl-pentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, a,a-Dimethylbenzyl, p-Tolyl-methyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycar-bonylethyl, 2-Butoxycarbonylpropyl, 1,2-Di-(methoxycarbonyl)-ethyl, Methoxy, Ethoxy, 1,3-Dioxolan-2-yl, 1,3-Dioxan-2-yl, 2-Methyl-1,3-dioxolan-2-yl, 4-Methyl-1,3-dioxolan-2-yl, 2-Dimethylaminoethyl, 2-Dimethylaminopropyl, 3-Dimethylaminopropyl, 4-Dimethyl-aminobutyl, 6-Dimethylaminohexyl, 2-Phenoxyethyl, 2-Phenoxypropyl, 3-Phenoxypro-pyl, 4-Phenoxybutyl, 6-Phenoxyhexyl, 2-Methoxyethyl, 2-Methoxypropyl, 3-Methoxy-propyl, 4-Methoxybutyl, 6-Methoxyhexyl, 2-Ethoxyethyl, 2-Ethoxypropyl, 3-Ethoxypro-pyl, 4-Ethoxybutyl, 6-Ethoxyhexyl, $C_nF_{2(n-a)+(1-b)}H_{2a+b}$ mit n gleich 1 bis 30, $0 \leq a \leq n$ und b = 0 oder 1 (beispielsweise $CF_3$, $C_2F_5$, $CH_2CH_2$-$C_{(n-2)}F_{2(n-2)+1}$, $C_6F_{13}$, $C_8F_{17}$, $C_{10}F_{21}$, $C_{12}F_{25}$), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxy-propyl, 2-Octyloxyethyl, 2-Methoxyisopropyl, 2-(Methoxycarbonyl)-methyl, 2-(Ethoxycarbonyl)-methyl, 2-(n-Butoxycarbonyl)-methyl, Butylthiomethyl, 2-Dodecylthioethyl, 2-Phenylthioethyl, 5-Methoxy-3-oxa-pentyl, 8-Methoxy-3,6-dioxa-octyl, 11-Methoxy-3,6,9-trioxaundecyl, 7-Methoxy-4-oxa-heptyl, 11-Methoxy-4,8-dioxa-undecyl, 15-Methoxy-4,8,12-trioxapentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl handelt es sich bevorzugt um Vinyl, 2-Propenyl, 3-Butenyl, cis-2-Butenyl, trans-2-Butenyl oder $C_nF_{2(n-a)-(1-b)}H_{2a-b}$ mit $n \leq 30$, $0 \leq a \leq n$ und b = 0 oder 1.

Bei gegebenenfalls durch geeignete funktionelle Gruppen, Aryl, Alkyl, Aryloxy, Alkyl-oxy, Halogen, Heteroatome und/oder Heterozyklen substituiertes $C_6$-$C_{12}$-Aryl handelt es sich bevorzugt um Phenyl, Tolyl, Xylyl, $\alpha$-Naphthyl, $\beta$-Naphthyl, 4-Diphenylyl, Chlor-phenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dode-cylphenyl, Methoxyphenyl, Dimethoxyphenyl, Ethoxyphenyl, Hexyloxyphenyl, Methyl-naphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitro-phenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropyl-thiophenyl oder tert.-Butylthiophenyl oder $C_6F_{(5-a)}H_a$ mit $0 \leq a \leq 5$.

Bei gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, $C_nF_{2(n-a)-(1-b)}H_{2a-b}$ mit $n \leq 30$, $0 \leq a \leq n$ und b = 0 oder 1 sowie ein gesättigtes oder unge-sättigtes bizyklisches System wie z. B. Norbornyl oder Norbornenyl.

Bei gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cycloalkenyl handelt es sich bevorzugt um 3-Cyclopentenyl, 2-Cyclohexenyl, 3-Cyclohexenyl, 2,5-Cyclohexadienyl oder $C_nF_{2(n-a)-3(1-b)}H_{2a-3b}$ mit $n \leq 30$, $0 \leq a \leq n$ und b = 0 oder 1.

Bei einen gegebenenfalls durch geeignete funktionelle Gruppen, Aryl, Alkyl, Aryloxy, Alkyloxy, Halogen, Heteroatome und/oder Heterozyklen substituierten fünf- bis sechsgliedrigen, Sauerstoff-, Stickstoff- und/oder Schwefelatome aufweisenden Heterozyklus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch geeignete funktionelle Gruppen, Aryl, Alkyl, Aryloxy, Alkyloxy, Halogen, Heteroatome und/oder Heterozyklen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste $R^1$ bis $R^9$ unabhängig voneinander für

- Wasserstoff;
- unverzweigtes oder verzweigtes, unsubstituiertes oder ein bis mehrfach mit Halogen, Phenyl, Cyano, $C_1$-$C_6$-Alkoxycarbonyl und/oder substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxycarbonyl)-ethyl, Trifluormethyl, Difluormethyl, Fluormethyl, Pentafluor-ethyl, Heptafluorpropyl, Heptafluorisopropyl, Nonafluorbutyl, Nonafluorisobutyl, Undecylfluorpentyl und Undecylfluorisopentyl;
- Glykole, Butylenglykole und deren Oligomere mit 1 bis 100 Einheiten und einem $C_1$- bis $C_8$-Alkyl als Endgruppe, wie beispielsweise $R^AO-(CHR^B-CH_2-O)_n-CHR^B-CH_2-$ oder $R^A-O-(CH_2CH_2CH_2CH_2O)_n-CH_2CH_2CH_2CH_2O-$ mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl;
- 1-Propen-1yl, 1-Propen-2-yl und 1-Propen-3yl; und
- N,N-Di-$C_1$-$C_6$-alkyl-amino, wie beispielsweise N,N-Dimethylamino und N,N-Diethylamino, wobei wenn IIIw für III steht, dann steht $R^3$ nicht für Wasserstoff.

Ganz besonders bevorzugt stehen die Reste $R^1$ bis $R^9$ unabhängig voneinander für Wasserstoff oder $C_1$-$C_{18}$-Alkyl, wie beispielsweise Methyl, Ethyl, 1-Butyl, 1-Pentyl, 1-Hexyl, 1-Heptyl, 1-Octyl, für Phenyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für $CH_3O-(CH_2CH_2O)_n-CH_2CH_2-$ und $CH_3CH_2O-(CH_2CH_2O)_n-CH_2CH_2-$ mit n gleich 0 bis 3, wobei wenn IIIw für III steht, dann steht $R^3$ nicht für Wasserstoff.

Ganz besonders bevorzugt setzt man als Pyridiniumionen (IVa) solche ein, bei denen

- einer der Reste $R^1$ bis $R^5$ Methyl, Ethyl oder Chlor ist und die verbleibenden Reste $R^1$ bis $R^5$ Wasserstoff sind;
- $R^3$ Dimethylamino ist und die verbleibenden Reste $R^1$, $R^2$, $R^4$ und $R^5$ Wasserstoff sind;
- alle Reste $R^1$ bis $R^5$ Wasserstoff sind;
- $R^1$ und $R^2$ oder $R^2$ und $R^3$ 1,4-Buta-1,3-dienylen ist und die verbleibenden Reste $R^1$, $R^2$, $R^4$ und $R^5$ Wasserstoff sind;

und insbesondere solche, bei denen

- $R^1$ bis $R^5$ Wasserstoff sind; oder
- einer der Reste $R^1$ bis $R^5$ Methyl oder Ethyl ist und die verbleibenden Reste $R^1$ bis $R^5$ Wasserstoff sind.

Als ganz besonders bevorzugte Pyridiniumionen (IVa) seien genannt 1-Methylpyridini-um, 1-Ethylpyridinium, 1-(1-Butyl)pyridinium, 1-(1-Hexyl)pyridinium, 1-(1-Octyl)pyridini-um, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethyl-pyridinium, 1-(1-Hexadecyl)-2-ethylpyridinium, 1,2-Dimethyl-5-ethyl-pyridinium, 1,5-Di-ethyl-2-methyl-pyridinium, 1-(1-Butyl)-2-methyl-3-ethylpyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexa-decyl)-2-methyl-3-ethyl-pyridinium.

Ganz besonders bevorzugt setzt man als Pyridaziniumionen (IVb) solche ein, bei denen

- $R^1$ bis $R^4$ Wasserstoff sind; oder
- einer der Reste $R^1$ bis $R^4$ Methyl oder Ethyl ist und die verbleibenden Reste $R^1$ bis $R^4$ Wasserstoff sind.

Ganz besonders bevorzugt setzt man als Pyrimidiniumionen (IVc) solche ein, bei denen

- $R^1$ Wasserstoff, Methyl oder Ethyl ist und $R^2$ bis $R^4$ unabhängig voneinander Wasserstoff oder Methyl sind; oder
- $R^1$ Wasserstoff, Methyl oder Ethyl ist, $R^2$ und $R^4$ Methyl sind und $R^3$ Wasserstoff ist.

Ganz besonders bevorzugt setzt man als Pyraziniumionen (IVd) solche ein, bei denen

- $R^1$ Wasserstoff, Methyl oder Ethyl ist und $R^2$ bis $R^4$ unabhängig voneinander Wasserstoff oder Methyl sind;
- $R^1$ Wasserstoff, Methyl oder Ethyl ist, $R^2$ und $R^4$ Methyl sind und $R^3$ Wasserstoff ist;
- $R^1$ bis $R^4$ Methyl sind; oder
- $R^1$ bis $R^4$ Wasserstoff sind.

Ganz besonders bevorzugt setzt man als Imidazoliumionen (IVe) solche ein, bei denen

- $R^1$ Wasserstoff, Methyl, Ethyl, 1-Propyl, 1-Butyl, 1-Pentyl, 1-Hexyl, 1-Octyloder 2-Cyanoethyl und $R^2$ bis $R^4$ unabhängig voneinander Wasserstoff, Methyl oder Ethyl sind.

Als ganz besonders bevorzugte Imidazoliumionen (IVe) seien genannt 1-Methylimidazolium, 1-Ethylimidazolium, 1-(1-Butyl)-imidazolium, 1-(1-Octyl)-imidazolium, 1-(1-Do-decyl)-imidazolium, 1-(1-Tetradecyl)-imidazolium, 1-(1-Hexadecyl)-imidazolium, 1,3-Di-methylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Do-decyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazo-lium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimi-dazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-methylimidazolium.

Die am meisten bevorzugten 1,3-Dialkyl-Imidazolium-Ion sind 1-Butyl-3-Methyl-Imidazoliumion und 1-Ethyl-3-Methylimidazoliumion.

Ganz besonders bevorzugt setzt man als Pyrazoliumionen (IVf), (IVg) beziehungsweise (IVg') solche ein, bei denen

- $R^1$ Wasserstoff, Methyl oder Ethyl ist und $R^2$ bis $R^4$ unabhängig voneinander Wasserstoff oder Methyl sind.

Ganz besonders bevorzugt setzt man als Pyrazoliumionen (IVh) solche ein, bei denen

- $R^1$ bis $R^4$ unabhängig voneinander Wasserstoff oder Methyl sind.

Ganz besonders bevorzugt setzt man als 1-Pyrazoliniumionen (IVi) solche ein, bei denen

- unabhängig voneinander $R^1$ bis $R^6$ Wasserstoff oder Methyl sind.

Ganz besonders bevorzugt setzt man als 2-Pyrazoliniumionen (IVj) beziehungsweise (IVj') solche ein, bei denen

- $R^1$ Wasserstoff, Methyl, Ethyl oder Phenyl ist und $R^2$ bis $R^6$ unabhängig voneinander Wasserstoff oder Methyl sind.

Ganz besonders bevorzugt setzt man als 3-Pyrazoliniumionen (IVk) beziehungsweise (IVk') solche ein, bei denen

- $R^1$ und $R^2$ unabhängig voneinander Wasserstoff, Methyl, Ethyl oder Phenyl sind und $R^3$ bis $R^6$ unabhängig voneinander Wasserstoff oder Methyl sind.

Ganz besonders bevorzugt setzt man als Imidazoliniumionen (IVl) solche ein, bei denen

- $R^1$ und $R^2$ unabhängig voneinander Wasserstoff, Methyl, Ethyl, 1-Butyl oder Phenyl sind, $R^3$ und $R^4$ unabhängig voneinander Wasserstoff, Methyl oder Ethyl sind und $R^5$ und $R^6$ unabhängig voneinander Wasserstoff oder Methyl sind.

Ganz besonders bevorzugt setzt man als Imidazoliniumionen (IVm) beziehungsweise (IVm') solche ein, bei denen

- $R^1$ und $R^2$ unabhängig voneinander Wasserstoff, Methyl oder Ethyl sind und $R^3$ bis $R^6$ unabhängig voneinander Wasserstoff oder Methyl sind.

Ganz besonders bevorzugt setzt man als Imidazoliniumionen (IVn) beziehungsweise (IVn') solche ein, bei denen

- $R^1$ bis $R^3$ unabhängig voneinander Wasserstoff, Methyl oder Ethyl sind und $R^4$ bis $R^6$ unabhängig voneinander Wasserstoff oder Methyl sind.

Ganz besonders bevorzugt setzt man als Thiazoliumionen (IVo) beziehungsweise (IVo') sowie als Oxazoliumionen (IVp) solche ein, bei denen

- $R^1$ Wasserstoff, Methyl, Ethyl oder Phenyl ist und $R^2$ und $R^3$ unabhängig voneinander Wasserstoff oder Methyl sind.

Ganz besonders bevorzugt setzt man als 1,2,4-Triazoliumionen (IVq), (IVq') bezie-hungsweise (IVq") solche ein, bei denen

- $R^1$ und $R^2$ unabhängig voneinander Wasserstoff, Methyl, Ethyl oder Phenyl sind und $R^3$ Wasserstoff, Methyl oder Phenyl ist.

Ganz besonders bevorzugt setzt man als 1,2,3-Triazoliumionen (IVr), (IVr') beziehungsweise (IVr") solche ein, bei denen

- $R^1$ Wasserstoff, Methyl oder Ethyl ist und $R^2$ und $R^3$ unabhängig voneinander Wasserstoff oder Methyl sind, oder $R^2$ und $R^3$ zusammen 1,4-Buta-1,3-dienylen ist.

Ganz besonders bevorzugt setzt man als Pyrrolidiniumionen (IVs) solche ein, bei denen

- $R^1$ Wasserstoff, Methyl, Ethyl oder Phenyl ist und $R^2$ bis $R^9$ unabhängig voneinander Wasserstoff oder Methyl sind.

Ganz besonders bevorzugt setzt man als Imidazolidiniumionen (IVt) solche ein, bei denen

- $R^1$ und $R^4$ unabhängig voneinander Wasserstoff, Methyl, Ethyl oder Phenyl sind und $R^2$ und $R^3$ sowie $R^5$ bis $R^8$ unabhängig voneinander Wasserstoff oder Methyl sind.

Ganz besonders bevorzugt setzt man als Ammoniumionen (IVu) solche ein, bei denen

- $R^1$ bis $R^3$ unabhängig voneinander $C_1$- bis $C_{18}$-Alkyl sind; oder

- $R^1$ und $R^2$ zusammen 1,5-Pentylen oder 3-Oxa-1,5-pentylen sind und $R^3$ $C_1$-$C_{18}$-Alkyl oder 2-Cyanoethyl ist.

Als ganz besonders bevorzugte Ammoniumionen aus der Gruppe (IVu) seien genannt Methyltri-(1-butyl)-ammonium und Tetra(1-butyl)-ammonium; aus der Gruppe (IVx1) N,N-Dimethylpiperidinium und 1-Butyl-1-methylpiperidinium; aus der Gruppe (IVx2) 1-Ethly-3-methylimidazoinium; und aus der Gruppe IVx3 N,N-Dimethylmorpholinium.
Beispiele für die tertiären Amine, von denen sich die quatären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethyl-hexyl-amin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-isopropyl-n-propylamin, Di-isopropyl-butylamin, Di-isopropylpentylamin, Di-isopropylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzyl-amin, Din-butylbenzylamin, Diethylphenylamin, Di-n-Propylphenylamin und Di-n-Butyl-phenylamin. Bevorzugte quartäre Ammoniumsalze der allgemeinen Formel (IVu) sind solche, die sich von folgenden tertiären Aminen durch Quarternisierung mit den genannten Resten R ableiten lassen, wie Di-iso-propylethylamin, Diethyl-tert-butylamin, Di-iso-propylbutyl-amin, Di-n-butyl-n-pentylamin, N,N-Di-n-butylcyclohexylamin sowie tertiäre Amine aus Pentylisomeren.
Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.
Ganz besonders bevorzugt setzt man als Guanidiniumionen (IVv) solche ein, bei denen

- die Stickstoffatome in Ringstrukturen vorliegen; oder
- $R^1$ bis $R^5$ Methyl sind.

Als ganz besonders bevorzugtes Guanidiniumion (IVv) sei genannt N,N,N',N',N",N"-Hexamethylguanidinium.
Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Methyl oder Ethyl, $_2$ ist;
- $R^1$ Methyl, Ethyl, 1-Butyl oder 1-Octyl ist, $R^2$ eine $-CH_2-CH_2-OR^4$-Gruppe ist und $R^3$ und $R^4$ unabhängig voneinander Methyl oder Ethyl, sind; oder
- $R^1$ eine $-CH_2-CH_2-OR^4$-Gruppe ist, $R^2$ eine $-CH_2-CH_2-OR^5$-Gruppe ist und $R^3$ bis $R^5$ unabhängig voneinander Methyl oder Ethyl, sind.

Besonders bevorzugte Choliniumionen (IVw) sind solche, bei denen $R^3$ ausgewählt ist aus Methyl, Ethyl, 5-Methoxy-3-oxa-pentyl, 8-Methoxy-3,6-dioxa-octyl, 11-Methoxy-3,6,9-trioxaundecyl, 7-Methoxy-4-oxa-heptyl, 11-Methoxy-4,8-dioxa-undecyl, 15-Methoxy-4,8,12-trioxapentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.
Ganz besonders bevorzugt setzt man als Amidiniumionen (IVx) solche ein, bei denen die Stickstoffatome in einer Ringstruktur vorliegen.
Als ganz besonders bevorzugte Amidiniumionen (IVx) seien genannt eine einfach protonierte Form von 1,8-Diazabicyclo[5.4.0]undec-7-en (DBU) oder von 1,5-Diazabicyclo[4.3.0]non-5-en.
Ganz besonders bevorzugt setzt man als Phosphoniumionen (IVy) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Unter den vorstehend genannten heterozyklischen Kationen sind die Pyridiniumionen, Pyrazolinium-, Pyrazoliumionen und die Imidazolinium- sowie die Imidazoliumionen bevorzugt. Weiterhin sind Ammoniumionen bevorzugt.
Insbesondere bevorzugt sind 1-Methylpyridinium, 1-Ethylpyridinium, 1-(1-Butyl)pyridini-um, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Do-decyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethyl-pyridinium, 1-(1-Hexyl)-2-ethylpyridinium, 1-(1-Octyl)-2-ethylpyridinium, 1-(1-Dodecyl)-2-ethyl-

pyridinium, 1-(1-Tetradecyl)-2-ethylpyridinium, 1-(1-Hexadecyl)-2-ethylpyridini-um, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-2-methyl-3-ethylpyridinium, 1-(1-Tetradecyl)-2-methyl-3-ethyl-pyridinium, 1-(1-Hexadecyl)-2-methyl-3-ethylpyridinium, 1-Methylimi-dazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methyl-imidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazo-lium und 1-(1-Octyl)-2,3-dimethylimidazolium, 1,4-Dimethylimidazolium, 1,3,4-Trime-thylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-metyl-imidazolium.

Als Anionen sind prinzipiell alle Anionen einsetzbar.

Das Anion $[Y]^{n-}$ der ionischen Flüssigkeit ist bevorzugt ausgewählt aus

- der Gruppe der Halogenide
- der Gruppe der Carbonsäuren der allgemeinen Formel: $RCOO^{1-}$
- der Gruppe der Carbonate und Kohlensäureester der allgemeinen Formel: $HCO_3^{1-}$, $CO_3^{2-}$, $RCO_3^{1-}$
- der Gruppe der mehrwertigen Carbonsäuren der allgemeinen Formel: $R(COOH)_n(COO^-)_m$ ($n \geq 0$, $m > 0$)
- der Gruppe der aromatischen Hydroxylverbindungen der allgemeinen Formel: $R_mC_6H_n(OH)_p(O^-)_q$ ($m + n + p + q = 6$, $q > 0$).

Darin bedeuten R $C_1$-$C_{30}$-Alkyl, gegebenenfalls durch ein oder mehrere nicht-benachbarte Sauerstoff- und/oder Schwefelatome und/oder ein oder mehrere substituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterozyklus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch geeignete funktionelle Gruppen, Aryl, Alkyl, Aryloxy, Alkyloxy, Halogen, Heteroatome und/oder Heterozyklen substituiert sein können.

Darin sind gegebenenfalls durch geeignete funktionelle Gruppen, Aryl, Alkyl, Aryloxy, Alkyloxy, Halogen, Heteroatome und/oder Heterozyklen substituiertes $C_1$-$C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, Benzyl, 1-Phenylethyl, $\alpha,\alpha$-Dimethylbenzyl, Benzhydryl, p-Tolylmethyl, 1-(p-Butyl-phenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxy-carbonylpropyl, 1,2-Di-(methoxycarbonyl)-ethyl, 2-Methoxyethyl, 2-Ethoxyethyl, 2-Bu-toxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythio-ethyl, 2,2,2-Trifluorethyl, 2-Dimethylaminoethyl, 2-Dimethylaminopropyl, 3-Dimethyl-aminopropyl, 4-Dimethylaminobutyl, 6-Dimethylaminohexyl, 2-Phenoxyethyl, 2-Phen-oxypropyl, 3-Phenoxypropyl, 4-Phenoxybutyl, 6-Phenoxyhexyl, 2-Methoxyethyl, 2-Me-thoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Imino-gruppen unterbrochenes $C_2$-$C_{18}$-Alkyl sind beispielsweise 5-Methoxy-3-oxapentyl, 8-Methoxy-3,6-dioxa-octyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxano-nyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetra-decyl.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methyl-imino-, iso-Propylimino, n-Butylimino oder tert-Butylimino sein.

Unter dem Begriff "funktionelle Gruppen" sind beispielsweise die folgenden zu verstehen: Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl,

sec-Butyl oder tert.-Butyl.

Gegebenenfalls durch geeignete funktionelle Gruppen, Aryl, Alkyl, Aryloxy, Alkyloxy, Halogen, Heteroatome und/oder Heterozyklen substituiertes $C_6$-$C_{14}$-Aryl sind beispiels-weise Phenyl, Tolyl, Xylyl, α-Naphthyl, β-Naphthyl, 4-Diphenylyl, Chlorphenyl, Dichlor-phenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Meth-oxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphe-nyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch geeignete funktionelle Gruppen, Aryl, Alkyl, Aryloxy, Halogen, Heteroatome und/oder Heterozyklen substituiertes $C_5$-$C_{12}$-Cycloalkyl sind beispielsweise Cyclopentyl, Cyclohexyl, Cyclooctyl, Cyclododecyl, Methylcyclopentyl, Dimethylcy-clopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bizyklisches System wie Norbornyl oder Norbornenyl.

Ein fünf- bis sechsgliedriger, Sauerstoff-, Stickstoff- und/oder Schwefelatome aufweisender Heterozyklus ist beispielsweise Furyl, Thiophenyl, Pyryl, Pyridyl, Indolyl, Benz-oxazolyl, Dioxolyl, Dioxyl, Benzimidazolyl, Benzthiazolyl, Dimethylpyridyl, Methylchinolyl, Dimethylpyryl, Methoxyfuryl, Dimethoxypyridyl, Diflourpyridyl, Methylthiophenyl, Isopropylthiophenyl oder tert.-Butylthiophenyl.

Besonders bevorzugte Anionen in den ionischen Flüssigkeiten sind die Halogenide, weiter bevorzugt Chlorid, Bromid und Jodid, und ganz besonders bevorzugt Chlorid.

In einer weiteren bevorzugten Ausführungsform ist die ionischen Flüssigkeit eine Kombination aus Lewis-Säure und eine Lewis Base, wobei diese bevorzugt aus einer der oben genannten Bevorzugungen ausgewählt werden.

In einer bevorzugten Ausführungsform umfasst die Katalysatorzusammensetzung (iii) mindestens eine ionische Flüssigkeit, wobei die ionische Flüssigkeit bevorzugt ein heterozyklisches Kation oder ein Ammoniumkation, weiter bevorzugt ein Kation ausgewählt aus der Gruppe bestehend aus Pyridiniumionen, Pyrazolinium-, Pyrazoliumionen, Imidazolinium, Imidazolium und Ammonium, umfasst und ein entsprechendes Anion, welches bevorzugt ausgewählt ist aus der Gruppe der Halogenide, weiter bevorzugt ausgewählt aus der Gruppe bestehend aus Chlorid, Bromid und Jodid, weiter bevorzugt Chlorid.

Besonders bevorzugt ist die mindestens eine ionische Flüssigkeit ausgewählt aus der Gruppe bestehend aus 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-Ethyl-2,3-dimethylimidazolium-bromid (EDMIM-Br) und 1-(2-hydroxyethyl)-3-methylimidazolium chlorid (HEMIM-Cl). In einer weiteren bevorzugten Ausführungsform werden zumindest zwei dieser Katalysatoren verwendet.

Gemäß einer bevorzugten Ausführungsform stellen die Mengen an Polyisocyanatzusammensetzung (i), Epoxidzusammensetzung (ii) und Katalysatorzusammensetzung (iii) 95 Gewichts-%, bevorzugt 98 Gewichts-%, der gesamten Reaktionsmenge aller vorhandenen Stoffe dar.

In dieser Ausführungsform wird bevorzugt kein Lösungsmittel verwendet. Dadurch können die Schmelzviskositäten sehr hoch werden, weshalb besonders geeignete Rührwerke verwendet werden müssen. Bevorzugte Beispiele für solche Rührwerke sind Extruder, Micro Compounder, wie sie beispielsweise von der Firma Xplore angeboten werden, oder Plasti-Corder, wie sie beispielsweise von der Fa. Brabender angeboten werden.

## Co-Katalysatoren

In anderen bevorzugten Ausführungsformen werden neben der oben genannten Katalysatorzusammensetzung Harnstoff-Derivate als Co-Katalysator eingesetzt.

Die Verwendung von Harnstoffen als Co-Katalysatoren hilft bei der Umsetzung des Isocyanates mit dem Epoxid. Eine schnellere Umsetzung des Isocyanates ist vorteilhaft, da längere Verweilzeiten des Isocyanates im Reaktionsgemisch die Wahrscheinlichkeit der Trimersierung des Isocyanates erhöhen und somit die Chemoselektivität zur Oxazolidonbildung verschlechtern. Bevorzugte sind Harnstoffe, welche bei Zersetzung, z.B. bei Zuführung von Wärme, keine primären Amine abspalten.

Geeignete Co-Katalysatoren sind demnach Harnstoffderivate der folgenden Formel

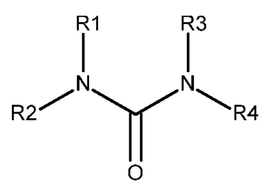

wobei

R1, R2, R3 und R4 Alkylreste sind mit unabhängig voneinander 1 bis 10 Kohlenstoffatomen oder
R1 und R2 Alkylreste sind mit unabhängig voneinander 1 bis 10 Kohlenstoffatomen und R3 ein Aryl-Rest und gleichzeitig R4 ein Wasserstoffatom oder R3 ein Aryl-Rest und R4 ein Wasserstoffatom ist.

Der Arylrest ist in einer bevorzugten Ausführungsform substituiert, bevorzugt mit einem weiteren Harnstoffrest. In anderen bevorzugten Ausführungsformen ist der Arylrest mit mehreren Harnstoffresten substituiert. Die entsprechenden Strukturen werden auch als Polyharnstoff angesprochen.

In anderen bevorzugten Ausführungsformen sind die Alkyl-Substituenten miteinander verbunden und weisen Ringstrukturen auf. Bevorzugte Beispiel hierfür sind 1,3-Dimethyl-3,4,5,6-tetrahydro-2(1H)-pyrimidinon und 1,3-Dimethyl-2-imidazolidinon.

Besonders bevorzugt sind Co-Katalysatoren ausgewählt aus der Gruppe 3,3'-(4-Methyl-1,3-phenylene) bis (1,1-dimethylurea) und 1,1-dimethyl-3-phenylurea. Kommerziell erhältliche Produkte dieser Klasse sind z.B. die Dimethylharnstoffe der Firma AlzChem, Handelsname Dyhard.

Gemäß einer bevorzugten Ausführungsform stellen die Mengen an Polyisocyanatzusammensetzung (i), Epoxidzusammensetzung (ii), Katalysatorzusammensetzung (iii) und Co-Katalysator 95 Gewichts-%, bevorzugt 98 Gewichts-%, der gesamten Reaktionsmenge aller vorhandenen Stoffe dar.

In einer bevorzugten Ausführungsform wird der Co-Katalysator als Lösungsmittel für die Reaktanten eingesetzt, wobei in einer bevorzugten Ausführungsform der Co-Katalysator 1,3-Dimethyl-2-imidazolidon ist.

Cokatalysatoren bzw. Lösungsmittel werden bevorzugt vor ihrer Verwendung getrocknet. In einer bevorzugten Ausführungsform erfolgt die Trockung durch ein Molekularsieb.

In einer Ausführungsform wird zusätzlich oder anstelle des Cokatalysators mindestens ein Lösungsmittel eingesetzt. Geeignete Lösungsmittel sind aprotisch-polar, um nicht mit dem Isocyanat zu reagieren, bevorzugt Dichlorbenzol, bevorzugt 1,2, Dichlorbenzol, 1, 2, 3; 1, 2, 4 und 1,3,5 Trichlorbenzol, Sulfolan, Mesitylen, oder N-Methylpyrolidon. Ein besonders geeignetes Lösungsmittel ist Sulfolan (Tetrahydrothiophen-1,1-dioxid).

In einer bevorzugten Ausführungsform ist der Wassergehalt der Reaktionsmischung kleiner als 0,1 Gew.-%. So wird insbesondere die Nebenreaktion des Isocyanats zu Harnstoff verhindert.

Das Molverhältnis des Diepoxids zum Diisocyanat liegt - über alle Schritte (a), (b), (c) und (d) gesehen- in einem Bereich zwischen 1,0 : 0,5 bis 0,5 : 1,0, bevorzugt zwischen 1,0 : 0,9 bis 0,9 :1,0 und besonders bevorzugt bei 1,0 : 1,0. Die Katalysatorkonzentration beträgt 0,05 Mol-% bis 5 Mol-% auf Epoxidgruppen des Diepoxids, bevorzugt 0,05 Mol-% bis 2 Mol-%, und besonders bevorzugt 0,05 Mol-% bis 0,5 Mol-%.Die Konzentration des optionalen Co-Katalysators beträgt 0,01 Mol-% bis 1000 Mol-% bezogen auf Epoxidgruppen des Diepoxids, bevorzugt 0,05 Mol-% bis 100 Mol-%, besonders bevorzugt 0,05 Mol-% bis 10 Mol-% und ins besondere 0,05 Mol-% bis 1 Mol-%.

Erfindungsgemäß erfolgen die Schritte (b), (c) und (d), bevorzugt die Schritte (a), (b), (c) und (d) unter Ausschluss von Sauerstoff, weiter bevorzugt in Gegenwart von Inertgas. Inertgas sollen im Rahmen der vorliegenden Erfindung sämtliche unter den jeweils gewählten Verfahrensbedingungen gasförmigen Materialien sein, die in den Stufen (b), (c) und (d), bevorzugt in den Stufen (a), (b), (c) und (d) inert sind. Inert bedeutet in diesem Zusammenhang, dass sich das gasförmige Material zu weniger als 5 mol-%, bevorzugt zu weniger als 2 mol-%, besonders bevorzugt zu weniger als 1 mol-% umsetzt. Dabei bezeichnet der Begriff "Inertgas", wie er in diesem Kontext der vorliegenden Erfindung verwendet wird, sowohl ein einzelnes Gas als auch ein Gemisch aus zwei oder mehr Gasen. Beispielsweise kommen als Inertgase Helium, Neon, Argon, Krypton, Radon, Xenon, Stickstoff und Gasgemische aus zwei oder mehr davon in Betracht.

Die vorliegende Erfindung betrifft weiterhin ein thermoplastisches Polymer erhalten oder erhältlich nach dem voranstehend beschriebenen Verfahren.

Thermoplastisches Polymer

Weiterhin betrifft die Erfindung ein thermoplastisches Polymer, erhalten oder erhältlich durch Umsetzung mindestens der Komponenten (i) bis (ii)

i) eine Polyisocyanatzusammensetzung umfassend mindestens ein Diisocyanat;
ii) eine Epoxidzusammensetzung umfassend mindestens ein Diepoxid; in Gegenwart einer Katalysatorzusammensetzung (iii); wobei

a) bei einer Temperatur in einem ersten Temperaturbereich ($T_1$) Epoxidzusammensetzung (ii) und Katalysatorzusammensetzung (iii) in Mischung vorgelegt werden;
b) unter Beibehaltung einer ersten Temperatur zumindest anteilig die Polyisocyanatzusammensetzung (i) zugegeben wird;

c) die Temperatur auf eine Temperatur in einem finalen Temperaturbereich ($T_f$) erhöht wird;
d) im finalen Temperaturbereich die Zugabe der verbliebenen Polyisocyanatzusammensetzung (i) erfolgt;

unter Erhalt eines thermoplastischen Polymers.

Temperaturbereiche

Gemäß (c) wird die Temperatur auf eine Temperatur in einem finalen Temperaturbereich ($T_f$) erhöht. Bevorzugt umfasst der finale Temperaturbereich $T_f$ einen zweiten Temperaturbereich Bereich $T_2$ und einen dritten Temperaturbereich $T_3$, wobei der dritte Temperaturbereich $T_3$ oberhalb des zweiten Temperaturbereichs $T_2$ liegt und der zweite Temperaturbereich $T_2$ oberhalb des ersten Temperaturbereichs $T_1$ liegt. Bevorzugt liegt der finale Temperaturbereich $T_f$ bei >180 bis 250°C, bevorzugt >170 bis 250 °C, weiter bevorzugt >165 bis 250 °C, wobei bevorzugt der zweite Temperaturbereich $T_2$ >180 bis 200 °C, bevorzugt >170 bis 200 °C, weiter bevorzugt >165 bis 200 °C, und der dritte Temperaturbereich $T_3$ >200 bis 250 °C, bevorzugt >200 bis 230 °C, beträgt.

Gemäß (a) werden bei einer Temperatur in einem ersten Temperaturbereich ($T_1$) Epoxidzusammensetzung (ii) und Katalysatorzusammensetzung (iii) in Mischung vorgelegt. Bevorzugt beträgt der erste Temperaturbereich $T_1$ 140 bis 180 °C, bevorzugt 150 bis 170 °C, weiter bevorzugt 155 bis 165 °C.

Gemäß (b) wird unter Beibehaltung einer Temperatur im ersten Temperaturbereich $T_1$ zumindest anteilig die Polyisocyanatzusammensetzung (i) zugegeben. Bevorzugt werden im ersten Temperaturbereich $T_1$ gemäß (b) 80 bis 95 Gewichts-% der Polyisocyanatzusammensetzung (i), bezogen auf die Gesamtmenge der Polyisocyanatzusammensetzung (i), zugegeben.

"Unter Beibehaltung einer Temperatur im ersten Bereich T1" bedeutet, dass die Temperatur um bis zu +/- 10 °C, bevorzugt um +/- 5 °C, weiter bevorzugt um +/- 3°C, von der in (a) eingestellten Temperatur abweichen kann, wobei trotzdem eine Einhaltung des Temperaturbereichs T1 vorliegt, d.h. die Temperatur bleibt im Schritt (b) bevorzugt im Temperaturbereich $T_1$ von140 bis 180 °C, bevorzugt im Bereich von 150 bis 170 °C, weiter bevorzugt im Bereich von 155 bis 165 °C.

Gemäß (d) erfolgt im finalen Temperaturbereich die Zugabe der verbliebenen Polyisocyanatzusammensetzung (i). Bevorzugt werden im finalen Temperaturbereich $T_f$ 5 bis 20 Gewichts-% der Polyisocyanatzusammensetzung (i), bezogen auf die Gesamtmenge der Polyisocyanatzusammensetzung (i), zugegeben, wobei bevorzugt im zweiten Temperaturbereich $T_2$ 5 bis 20 Gewichts-% der Polyisocyanatzusammensetzung (i), und im dritten Temperaturbereich $T_3$ optional 0 bis 10 Gewichts-%, bevorzugt 0 Gewichts-%, der Polyisocyanatzusammensetzung (i), jeweils bezogen auf die Gesamtmenge der Polyisocyanatzusammensetzung (i), zugegeben werden.

Die Zugabe der Polyisocyanatzusammensetzung (i) in (b) und (d) ist keinen Beschränkungen unterlaufen, sie kann kontinuierlich mit gleicher Menge / Zeit, kontinuierlich mit variierender Menge / Zeit oder diskontinuierlich erfolgen. Bevorzugt erfolgt die Zugabe der Polyisocyanatzusammensetzung (i) in (b) und (d) kontinuierlich mit gleicher Menge/Zeit.

Polyisocyanatzusammensetzung

Gemäß (i) umfasst die Polyisocyanatzusammensetzung mindestens ein Diisocyanat.

Vorliegend wird als mindestens ein Diisocyanat sowohl eine einzige Substanz als auch eine Mischung von Substanzen verstanden, die bevorzugt aus der nachfolgenden Aufzählung ausgewählt ist. Die Diisocyanate sind ausgewählt aus der Gruppe der aliphatischen, cycloaliphatischen, araliphatischen und/oder aromatischen Isocyanate, die weiter bevorzugt ausgewählt sind aus der Gruppe Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylendiisocyanat-1,5, Butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat, 4,4'-, 2,4'- und 2,2'-Dicyclohexylmethan-diisocyanat (H12 MDI), 2,4-Paraphenylendiisocynat (PPDI), 2,4-Tetramethylenxylendiisocyant (TMXDI). Bevorzugt sind aromatische Diisocyanate, die aus der obigen Liste ausgewählt sind. Weiter bevorzugt ist das Isocyant ausgewählt aus der Gruppe Toluylendiisocyanat (TDI), Diphenylmethandiisocyanat (MDI) und 1,5-Naphthylendiisocyanat (NDI). Ganz besonders bevorzugt sind Toluylendiisocyanat (TDI) oder Diphenylmethandiisocyanat (MDI).

Gemäß einer Ausführungsform enthält die Polyisocyanatzusammensetzung (i) kein Isocyanat mit einer Funktionalität größer 2,0. Dies bedeutet, dass die Polyisocyanatzusammensetzung (i) nur Diisocyanate mit einer Funktionalität von 2,0 enthält, wobei dies bevorzugt Diisocyanate mit einer Funktionalität im Bereich von 1,95 bis 2,05, umfasst. Weiter bevorzugt besteht die Polyisocyanatzusammensetzung (i) zu mindestens 98 Gewichts-%, aus dem mindestens einen Diisocyanat, jeweils bezogen auf das Gesamtgewicht der Polyisocyanatzusammensetzung (i).

Die Bestimmung der Funktionalität eines Isocyanats, d.h. des Gehalts an Isocyanatgruppen, erfolgt gemäß DIN EN ISO 14896.

Epoxidzusammensetzung

Gemäß (ii) umfasst die Epoxidzusammensetzung mindestens ein Diepoxid.

Vorliegend wird als mindestens ein Diepoxid sowohl eine einzige Substanz als auch eine Mischung von Substanzen verstanden. Bevorzugt enthält die Epoxidzusammensetzung (ii) kein Epoxid mit einer Funktionalität größer 2,0. Dies bedeutet, dass die Epoxidzusammensetzung (ii) nur Diepoxide mit einer Funktionalität von 2,0 enthält, wobei dies bevorzugt Diepoxide mit einer Funktionalität im Bereich von 1,95 bis 2,05, umfasst. In einer bevorzugten Ausführungsform besteht die Epoxidzusammensetzung (ii) zu mindestens 98 Gewichts-% aus dem mindestens einen Diepoxid, jeweils bezogen auf das Gesamtgewicht der Epoxidzusammensetzung (ii)

Diese Diepoxide können dabei sowohl gesättigt als auch ungesättigt, aliphatisch, cycloaliphatisch, aromatisch oder heterocyclisch sein. Sie können weiterhin solche Substituenten enthalten, die unter den Reaktionsbedingungen keine störenden Nebenreaktionen verursachen, beispielsweise Alkyl- oder Arylsubstituenten, Ethergruppierungen und dergleichen.

Vorzugsweise handelt es sich bei den Diepoxiden um Polyglycidylether auf der Basis von zweiwertigen Alkoholen, Phenolen, Hydrierungsprodukten dieser Phenole und/oder von Novolacken. Novolacke sind Umsetzungsprodukte von Phenolen mit Aldehyden, insbesondere Formaldehyd, in Gegenwart saurer Katalysatoren, besonders bevorzugt sind dabei die Diglycidylether. Möglich sind jedoch auch Diepoxide auf Basis von anderen Strukturen, welche keine Ethergruppen enthalten.

Andere bevorzugte Diepoxide basieren auf Diglycidylethern von natürlichen Rohstoffen, bevorzugt Cardanol. Ein typisches Beispiel für ein solches Produkt ist Cardolite NC 514 (Fa. Cardolite). Der Vorteil dieses Epoxids ist die längere Alkylkette zwischen den Aromaten die zu einer höheren Flexibilität der daraus hergestellten Polymere führt. Besonders wirken sich die Vorzüge von aliphatischen Strukturelementen in Kombination mit aromatischen Diglycidylethern aus. Daher sind Diepoxide basierend auf aliphatischen Diglycidylethern in Kombination mit aromatischen Diglycidylethern besonders bevorzugt.

Die Epoxidäquivalentgewichte dieser Epoxidverbindungen liegen vorzugsweise zwischen 100 und 5000, insbesondere zwischen 150 und 500. Das Epoxidäquivalentgewicht einer Substanz ist dabei als diejenige Menge der Substanz (in Gramm) definiert, welche 1 Mol Oxiranringe enthält. Zur Charakterisierung des Gehalts von Verbindungen an Oxirangruppen ("Epoxidgruppen") wird üblicherweise eine Epoxidtitration mit einer 0,1-N Lösung von Perchlorsäure in Eisessig durchgeführt (vgl. DIN EN ISO 3001). Die dabei erhaltene Epoxidzahl (%EpO) gibt an, wieviel Gramm Oxiran-Sauerstoff in 100 Gramm einer Probe enthalten sind. Als Indikator setzt man Kristallviolett ein. Die Bestimmung setzt die Abwesenheit von Wasser, Basen und Aminen voraus. Aus dem Verbrauch an ml 0,1N Perchlorsäure bei der Titration (x), dem Verbrauch an ml 0,1N Perchlorsäure bei der Blindprobe (y) und der Einwage der zu untersuchenden Probe in Gramm (E) wird der Epoxidgehalt %EpO wird wie folgt berechnet: $\% EpO=[(x-y)+0{,}160]/E$. Das Epoxid-Äquivalentgewicht (EEW) errechnet sich daraus wiederum nach der folgenden Formel: $EEW = 1600 / \% EpO$, wobei die Dimension des EEW g/äq ist.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxybenzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon, sowie die Chlorierungs- und Bromierungsprodukte der vorstehend genannten Verbindungen; Bisphenol A ist dabei ganz besonderes bevorzugt. Handelsübliche Produkte für Bisphenol A-Diglycidylether sind beispielsweise DER 332, DER 331, oder DER 330 der Fa. DOW U.S.A. oder Epilox A18-00 der Firma Leuna Harze, Deutschland.

Katalysator

In einer Ausführungsform des thermoplastischen Polymers werden Polyisocyanatzusammensetzung gemäß (i) und Epoxidzusammensetzung gemäß (ii) in Gegenwart einer Katalysatorzusammensetzung (iii) umgesetzt.

Die für die Herstellung des thermoplastischen Polymers verwendeten Katalysatoren sind ionische Flüssigkeiten, wie sie eingangs im Hinblick auf das Verfahren zur Herstellung eines thermoplastischen Polymers durch Umsetzung mindestens der Komponenten (i) bis (ii) in der Sektion "Katalysator" beschrieben sind.

In einer bevorzugten Ausführungsform des thermoplastischen Polymers umfasst auch hier die Katalysatorzusammensetzung (iii) mindestens eine ionische Flüssigkeit, wobei die ionische Flüssigkeit weiter bevorzugt ein heterozyklisches Kation oder ein Ammoniumkation, weiter bevorzugt ein Kation ausgewählt aus der Gruppe bestehend aus Pyridiniumionen, Pyrazolinium-, Pyrazoliumionen, Imidazolinium, Imidazolium und Ammonium, umfasst und ein entsprechendes Anion, welches bevorzugt ausgewählt ist aus der Gruppe der Halogenide, weiter bevorzugt ausgewählt aus der Gruppe bestehend aus Chlorid, Bromid und Jodid, weiter bevorzugt Chlorid.

In einer besonders bevorzugten Ausführungsform des thermoplastischen Polymers ist auch hier die mindestens eine ionische Flüssigkeit ausgewählt aus der Gruppe bestehend aus 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-Ethyl-2,3-dimethylimidazolium-bromid (EDMIM-Br) und 1-(2-hydroxyethyl)-3-methylimidazolium chlorid (HEMIM-Cl).

Für das thermoplastische Polymer gilt das gleiche im Hinblick auf Cokatalysatoren bzw. Lösungsmittel bzw. Wassergehalt wie eingangs im Hinblick auf das Verfahren zur Herstellung eines thermoplastischen Polymers in der Sektion "Co-Katalysator" beschrieben.

In einer Ausführungsform des thermoplastischen Polymers stellen die Mengen an Polyisocyanatzusammensetzung (i), Epoxidzusammensetzung (ii) und Katalysatorzusammensetzung (iii) 95 Gewichts-%, bevorzugt 98 Gewichts-%, der gesamten Reaktionsmenge aller vorhandenen Stoffe dar.

Bevorzugt weist das thermoplastische Polymer eine zahlenmittlere Molmasse $M_n$ größer als 10000 g/mol, bevorzugt größer 15000 g/mol, weiter bevorzugt größer 18000 g/mol auf.

Die Polydispersität des thermoplastischen Polymers ist bevorzugt kleiner 4, weiter bevorzugt kleiner 3,5, wobei die Polydispersität PI der Quotient aus der gewichtsmittleren Molmasse $M_w$ und der zahlenmittleren Molmasse $M_n$ des thermoplastischen Polymers ist.

Die Erfindung betrifft weiterhin die Verwendung eines thermoplastischen Polymers erhalten oder erhältlich nach dem voranstehend beschriebenen Verfahren oder des voranstehend beschriebenen thermoplastischen Polymers für die Herstellung einer Faser oder eines Formkörpers durch Spritzguss, Kalandrieren, Pulversintern, Lasersintern, Schmelzpressen oder Extrusion; oder als Modifizierer für thermoplastisches Material.

Die vorliegende Erfindung wird durch die folgenden Ausführungsformen und Kombinationen von Ausführungsformen, die sich aus den entsprechenden Rückbezügen und Verweisen ergeben, näher illustriert. Insbesondere ist dabei anzumerken, dass in jedem Fall, in dem ein Bereich von Ausführungsformen benannt ist, beispielsweise im Kontext eines Ausdrucks wie "Verfahren gemäß einer der Ausführungsformen 1 bis 4" jede Ausführungsform in diesem Bereich als explizit für den Fachmann offenbart gemeint ist, d.h. die Formulierung dieses Ausdrucks für den Fachmann als synonym zu "Verfahren gemäß einer der Ausführungsformen 1, 2, 3 und 4" zu verstehen ist.

Die nachfolgenden Beispiele dienen der Veranschaulichung der Erfindung, sind aber in keiner Weise einschränkend hinsichtlich des Gegenstands der vorliegenden Erfindung.

## BEISPIELE

### 1. Chemikalien

| Bezeichnung | Chemische Bezeichnung |
|---|---|
| Diepoxid 1 | Bisphenol-A-Diglycidylether (D.E.R. 332, Bis-Phenol-A-diglycidylether von Sigma Aldrich, CAS 1675-54-3) |
| Diisocyanat 1 | 4,4'-Diphenylmethandiisocyanat (4,4'-MDI) |
| Diisocyanat 2 | 2,4-Toloyl-diisocyanat (2,4-TDI) |
| Katalysator 1 | 1-Butyl-1-methylpiperidinium-chlorid (BMPM-Cl) |
| Katalysator 2 | 1-Ethyl-2,3-dimethylimidazolium-bromid |
| Lösungsmittel 1 | Milchsäuredimethylamid |

### 2. Beispiele

2.1 Beispiel 1: Umsetzung von Bis-Phenol-A-diglycidylether mit MDI mit Temperaturgradient bei der Zugabe des MDIs

In einer Stickstoffbox wurden 60 g Diepoxid 1 und 0,084 g Katalysator 1 in ein 100 ml Glas eingewogen, mit einem Magnetrührfisch versehen und verschlossen. Die Mischung wurde aus der Stickstoffbox entnommen und auf einem Magnetrührer bei 80 °C für 3 h gemischt.

In einen 15 ml twin screw Microcompounder MC 15 High torque and High force der Firma Xplore wurden die beiden Extruderschnecken eingesetzt und er wurde mit einem Drehmomentschlüssel (50 Nm) fest verschlossen. Anschließend wurde auf 100 °C Außentemperatur geheizt. Auf den Extruder wurden 2 Verschlussplatten verschraubt. Die hintere Platte hatte einen Anschluss für eine Argon-Inertisierung. Die vordere Platte hatte einen Eingang für die Isocyanatdosierung.

Im Trockenschrank wurde eine 50 ml Flasche mit Diisocyanat 1 bei 70 °C 1 Stunde aufgeschmolzen.

Es wurden 12,2 g der warmen Mischung aus Diepoxid 1 und Katalysator 1 in den auf 100 °C temperierten Extruder gefüllt, indem die vordere Verschlussplatte kurzzeitig entfernt wurde. Die Isolierplatte wurde nach Befüllung wieder montiert und der Rührer wurde mit 100 U/min gestartet. Zur Inertisierung wurde der Versuch mit Argon 4.6 aus einer Gasflasche mit 20 l/h überlagert. Die Temperatur wurde von 100 °C auf 160 °C Außentemperatur erhöht. Es dauerte 5 Minuten, bis sich die Innentemperatur angepasst hatte und 155°C betrug. Nach den 5 min wurde die Dosierung von 6,91 ml Diisocyanat 1 mit einer Spritzenpumpe LA-100 (von Landgraf Laborsysteme HLL GmbH) durch eine 10 ml-Spritze mit Kanüle über den Eingang in der vorderen Verschlussplatte gestartet. Um die Spritze wurde hierzu ein Heizmantel gelegt und auf 70 °C erhitzt, damit das Diisocyanat 1 flüssig bleibt. Die Menge wurde kontinuierlich über exakt 1h zu dosiert, wobei die Zeitnahme mit Beginn der Dosierung startete. Nach 37 Minuten begann die Viskosität im Extruder langsam zu steigen. Dies war zu erkennen an der Kraft (anfänglich 95 N), die der Extruder maß. Nach 55 Minuten wurde die Außentemperatur auf 190°C erhöht. Der Extruder zeigte zu diesem Zeitpunkt eine Kraft von 2900 N. Durch die Temperaturerhöhung fiel die Kraft zunächst wieder, stieg dann aber wieder an. 5 Minuten später wurde die Temperatur auf 220 °C Außentemperatur erhöht, die Kraft betrug zu diesem Zeitpunkt 4500 N. Nach 60 Minuten war die Dosierung von Diisocyanat 1 beendet. Die Viskosität im Extruder stieg nach Dosierungsende weiter an, so dass 2 Minuten später die Temperatur auf 235°C erhöht wurde. Die Kraft betrug nun 10500 N. Innerhalb der 20 Minuten Nachreaktionszeit stieg die Viskosität und somit die Kraft noch weiter an auf 14000 N. Nach 80 Minuten wurde die entstandene Polymerschmelze des thermoplastischen Polymers (Polyoxazolidons) über den Ablasshahn als Polymerstrang entnommen.

2.2 Vergleichsbeispiel 1: Umsetzung von Bis-Phenol-A-diglycidylether mit MDI ohne Temperaturgradient bei der Zugabe des MDIs

In einer Stickstoffbox wurden 60 g Diepoxid 1 und 0,084 g Katalysator 1 in ein 100ml Glas eingewogen, mit einem Magnetrührfisch versehen und verschlossen. Die Mischung wurde aus der Stickstoffbox entnommen und auf einem Magnetrührer bei 80 °C für 3h gemischt.

In einen 15 ml twin screw Microcompounder MC 15 High torque and High force der Firma Xplore wurden die beiden Extruderschnecken eingesetzt und er wurde mit einem Drehmomentschlüssel (50 Nm) fest verschlossen. Anschließend wurde auf 100 °C Außentemperatur geheizt. Auf den Extruder wurden 2 Verschlussplatten verschraubt. Die hintere Platte hatte einen Anschluss für eine Argon-Inertisierung. Die vordere Platte hatte einen Eingang für die Isocyanatdosierung.

Im Trockenschrank wurde eine 50 ml Flasche mit Diisocyanat 1 bei 70 °C 1 Stunde aufgeschmolzen.

Es wurden 12,2 g der warmen Mischung aus Diepoxid 1 und Katalysator 1 in den auf 100 °C temperierten Extruder gefüllt, indem die vordere Verschlussplatte kurzzeitig entfernt wurde. Die Isolierplatte wurde nach Befüllung wieder montiert und der Rührer wurde mit 100 U/min gestartet. Zur Inertisierung wurde der Versuch mit Argon 4.6 aus einer Gasflasche mit 20 l/h überlagert. Die Temperatur wurde von 100 °C auf 180 °C Außentemperatur erhöht. Es dauert 5 min bis sich die Innentemperatur angepasst hatte auf 175°C. Nach den 5 min wurde die Dosierung von 6,91 ml Diisocyanat 1 mit einer Spritzenpumpe LA-100 (von Landgraf Laborsysteme HLL GmbH) durch eine 10 ml-Spritze mit Kanüle über den Eingang in der vorderen Verschlussplatte gestartet. Um die Spritze wurde hierzu ein Heizmantel gelegt und auf 70 °C erhitzt, damit das Diisocyanat 1 flüssig bleibt. Die Menge wurde kontinuierlich über exakt 1h zu dosiert, wobei die Zeitnahme mit Beginn der Dosierung startete.

Nach 42 Minuten begann die Viskosität im Extruder sehr langsam zu steigen. Dies war zu erkennen an der Kraft (anfänglich 88 N), die der Extruder maß. Nach 60 Minuten war die Dosierung von Diisocyanat 1 beendet. Die Viskosität betrug zu diesem Zeitpunkt erst 425 N. Die Viskosität im Extruder stieg nach Dosierungsende weiter an, so dass 15 Minuten später die Temperatur auf 200°C erhöht wurde. Die Kraft betrug nun 4100 N. Nach weiteren 5 Minuten betrug die Kraft 7200 N. Die entstandene Polymerschmelze des thermoplastischen Polymers (Polyoxazolidons) wurde nach 80 Minuten Fahrzeit über den Ablasshahn als Polymerstrang entnommen.

2.3 Beispiel 2: Umsetzung von Bis-Phenol-A-diglycidylether mit TDI mit Temperaturgradient bei der Zugabe des TDIs

In einer Stickstoffbox wurden 60 g Diepoxid 1 und 0,084 g Katalysator 1 in ein 100ml Glas eingewogen, mit einem Magnetrührfisch versehen und verschlossen. Die Mischung wurde aus der Stickstoffbox entnommen und auf einem Magnetrührer bei 80 °C für 3h gemischt.

In einen 15 ml twin screw Microcompounder MC 15 High torque and High force der Firma Xplore wurden die beiden Extruderschnecken eingesetzt und er wurde mit einem Drehmomentschlüssel (50 Nm) fest verschlossen. Anschließend wurde auf 100 °C Außentemperatur geheizt. Auf den Extruder wurden 2 Verschlussplatten verschraubt. Die

hintere Platte hatte einen Anschluss für eine Argon-Inertisierung. Die vordere Platte hatte einen Eingang für die Isocyanatdosierung.

Es wurden exakt 13,9 g der warmen Mischung aus Diepoxid 1 und Katalysator 1 in den auf 100 °C temperierten Extruder gefüllt, indem die vordere Verschlussplatte kurzzeitig entfernt wurde. Die Isolierplatte wurde wieder montiert und der Rührer wurde mit 100 U/min gestartet. Zur Inertisierung wurde der Versuch mit Argon 4.6 aus einer Gasflasche mit 20 l/h überlagert. Die Temperatur wurde von 100 °C auf 160 °C Außentemperatur erhöht. Es dauerte 5 min bis sich die Innentemperatur angepasst hatte auf 155°C. Nach den 5 min wurde die Dosierung von 5,77ml Diisocyanat 2 mit einer Spritzenpumpe LA-100 (von Landgraf Laborsysteme HLL GmbH) durch eine 10 ml-Spritze mit Kanüle über den Eingang in der vorderen Verschlussplatte gestartet. Die Menge wurde kontinuierlich über exakt 1 h zu dosiert, wobei die Zeitnahme mit Beginn der Dosierung begann. Nach 35 Minuten begann die Viskosität im Extruder langsam zu steigen. Dies war zu erkennen an der Kraft (anfänglich 88 N), die der Extruder maß. Nach 50 Minuten wurde die Außentemperatur auf 190 °C erhöht. Der Extruder zeigte zu diesem Zeitpunkt eine Kraft von 3300 N. Durch die Temperaturerhöhung fiel die Kraft zunächst wieder, stieg dann aber wieder an. 5 Minuten später wurde die Temperatur auf 210 °C Außentemperatur erhöht, da der Extruder eine Kraft von 5900 N anzeigte. Weitere 3 Minuten später wurde die Außentemperatur auf 230°C erhöht. Der Extruder zeigte jetzt eine Kraft von 7800 N an. Nach 60 Minuten war die Dosierung von Diisocynat 2 beendet. Die Viskosität im Extruder war nun sehr hoch, was man an der Kraft von 10700 N erkennen konnte. Innerhalb der 20 Minuten Nachreaktionszeit stieg die Viskosität und somit die Kraft noch leicht an auf 13000 N. Nach 80 Minuten wurde die entstandene Polymerschmelze des thermoplastischen Polymers (Polyoxazolidons) über den Ablasshahn als Polymerstrang entnommen.

2.4 Vergleichsbeispiel 2: (Isotherm) Umsetzung von Bis-Phenol-A-diglycidylether mit TDI ohne Temperaturgradient bei der Zugabe des TDIs

In einer Stickstoffbox wurden 60 g Diepoxid 1 und 0,084 g Katalysator 1 in ein 100ml Glas eingewogen, mit einem Magnetrührfisch versehen und verschlossen. Die Mischung wurde aus der Stickstoffbox entnommen und auf einem Magnetrührer bei 80 °C für 3 h gemischt.

In einen 15 ml twin screw Microcompounder MC 15 High torque and High force der Firma Xplore wurden die beiden Extruderschnecken eingesetzt und er wurde mit einem Drehmomentschlüssel (50 Nm) fest verschlossen. Anschließend wurde auf 100 °C Außentemperatur geheizt. Auf den Extruder wurden 2 Verschlussplatten plus Isolierplatten verschraubt. Die hintere Platte hatte einen Anschluss für eine Argon-Inertisierung. Die vordere Platte hatte einen Eingang für die Isocyanatdosierung.

Es wurden exakt 14,0 g der warmen Mischung aus Diepoxid 1 und Katalysator 1 in den auf 100 °C temperierten Extruder gefüllt, indem die vordere Verschlussplatte kurzzeitig entfernt wurde. Die Verschluss-und Isolierplatte wurde wieder montiert und der Rührer wurde mit 100 U/min gestartet. Zur Inertisierung wurde der Versuch mit Argon 4.6 aus einer Gasflasche mit 20 l/h überlagert. Die Temperatur wurde von 100 °C auf 160 °C Außentemperatur erhöht. Es dauerte 5 min bis sich die Innentemperatur angepasst hatte auf 155 °C. Nach den 5 min wurde die Dosierung von 5,77 ml Diisocyanat 2 mit einer Spritzenpumpe LA-100 (von Landgraf Laborsysteme HLL GmbH) durch eine 10 ml-Spritze mit Kanüle über den Eingang in der vorderen Verschlussplatte gestartet. Die Menge wurde kontinuierlich über exakt 1 h zu dosiert, wobei die Zeitnahme mit Beginn der Dosierung begann. Nach 35 Minuten begann die Viskosität im Extruder langsam zu steigen. Dies war zu erkennen an der Kraft (anfänglich 60 N), die der Extruder maß. Nach 60 Minuten war die Dosierung von Diisocynat 2 beendet. Die Viskosität im Extruder war nun sehr hoch, was man an der Kraft von 14742 N erkennen konnte. Das Produkt wurde über den Ablasshahn ausgefahren und als Polymerstrang entnommen, welcher eine raue Oberfläche aufwies und nicht vollständig klar war.

2.5 Analytik

Mit den entstandenen Polymeren der Beispiele 1 und 2 sowie der Vergleichsbeispiele 1, 2 und 3 wurden verschiedene Analysen durchgeführt, welche nachfolgend beschrieben sind.

Löslichkeit

Es wurde ein Löslichkeitstest in Lösungsmittel 1 gemacht: 0,25 g des Polymers wurden in 4,75 g Lösungsmittel 1 gelöst. Die Mischung wurde auf dem Magnetrührer bei 80°C zwei Stunden gerührt.

Molmassenverteilung / GPC

Mittels GPC (Gel-Permeations-Chromatographie) wurde die Molmassenverteilung des jeweiligen Polymers bestimmt. 0,2 g Polymer wurden in 8 ml *N,N*-Dimethylacetamid (99,8%ig) über Nacht bei Raumtemperatur gelöst. Am

nächsten Tag wurden über einen 45 μm Filter von Sartorius 100μL in das GPC injiziert. Mit *N,N*-Dimethylacetamid als Eluent wurde mit der HPLC-Pumpe 0202 der Firma Duratec mit 0,7mL/min über vier 60cm Phenogel™ 5 μm -Säulen ($10^3$-$10^4$-$10^4$-$10^3$Å) der Firma phenomenex in einem Differential-Brechungsindexdetektor RI2000 der Firma Duratec detektiert. Die Messung betrug 130 Minuten. Als Vergleichssubstanz dient Polymethylmethacrylat.

Aus den erhaltenen Werte wurden jeweils die gewichtsmittlere Molmasse $M_w$ und die zahlenmittlere Molmasse $M_n$ für jedes Polymer bestimmt. Weiterhin wurde die Polydispersität PI per Quotientbildung aus der gewichtsmittleren Molmasse $M_w$ und der zahlenmittleren Molmasse $M_n$ des jeweiligen thermoplastischen Polymers bestimmt: PI = $M_w$/ $M_n$.

Die Ergebnisse sind in Tabelle 1 wiedergegeben, wobei die Mengen der Edukte Diepoxid 1 und des jeweiligen Diisocyanats 1 oder 2 ausgehend von 100 g Diepoxid angegeben sind.

**Tabelle 1**

Rezeptur und Eigenschaften der erhaltenen Polymere

| Beispiel | Diepoxid 1 [g] | Diisocaynat | NCO [g] | $T_1$ [°C] | t ($T_1$) [min.] |
|---|---|---|---|---|---|
| 1 | 100 | 1 | 69,8 | 160 | 55 |
| Vergleichsbeispiel 1 | 100 | 1 | 69,8 | 180 | 70 |
| 2 | 100 | 2 | 49,4 | 160 | 50 |
| Vergleichsbeispiel 2 | 100 | 2 | 49,4 | 160 | 60 |

**Fortsetzung 1 von Tabelle 1**

| Beispiel | $T_2$ [°C] | t ($T_2$) [min.] | $T_3$ [°C] | t ($T_3$) [min.] |
|---|---|---|---|---|
| 1 | 190 | 5 | 210 | 20 |
| Vergleichsbeispiel 1 | - | - | 210 | 10 |
| 2 | 190 | 10 | 210-230 | 20 |
| Vergleichsbeispiel 2 | - | - | - | - |

**Fortsetzung 2 von Tabelle 1**

| Beispiel | M Berechnet [g/mol] | $M_n$ bestimmt [g/mol] | $M_w$ bestimmt [g/mol] | PI | max. Kraft [N] |
|---|---|---|---|---|---|
| 1 | 22765 | 19564 | 59025 | 3,0 | 13943 |
| Vergleichsbeispiel 1 | 22765 | 9326 | 41160 | 4,4 | 7195 |
| 2 | 54894 | 18566 | 59444 | 3,2 | 13059 |
| Vergleichsbeispiel 2 | 54894 | 5391 | 18724 | 3,5 | 14742 |

Der Vergleich zwischen Beispielen und Vergleichsbeispielen belegt eindeutig, dass mit dem gewählten Verfahren mit Temperaturgradienten Polymere mit höherem Molekulargewicht, sowohl $M_n$ als auch $M_w$, sowie niedrigerer Polydispersität hergestellt werden können.

**Angeführte Literatur**

- DE 10 2014 226 838 A1
- WO 2015/173111 A1
- WO 2015/173110 A1, US 2014/0121299
- WO 2014/076024 A1
- PCT/EP2018/053612
- DE 102 02 838 A1
- Angew. Chem. 2000, 112, S. 3926 - 3945


## Patentansprüche

**1.** Verfahren zur Herstellung eines thermoplastischen Polymers durch Umsetzung mindestens der Komponenten (i) bis (ii)

i) eine Polyisocyanatzusammensetzung umfassend mindestens ein Diisocyanat;
ii) eine Epoxidzusammensetzung umfassend mindestens ein Diepoxid;

in Gegenwart einer Katalysatorzusammensetzung (iii); wobei

a) bei einer Temperatur in einem ersten Temperaturbereich ($T_1$) Epoxidzusammensetzung (ii) und Katalysatorzusammensetzung (iii) in Mischung vorgelegt werden;
b) unter Beibehaltung einer Temperatur im ersten Temperaturbereich $T_1$ zumindest anteilig die Polyisocyanatzusammensetzung (i) zugegeben wird;
c) die Temperatur auf eine Temperatur in einem finalen Temperaturbereich ($T_f$) erhöht wird;
d) im finalen Temperaturbereich die Zugabe der verbliebenen Polyisocyanatzusammensetzung (i) erfolgt.

**2.** Verfahren nach Anspruch 1, wobei der finale Temperaturbereich $T_f$ einen zweiten Temperaturbereich Bereich $T_2$ und einen dritten Temperaturbereich $T_3$ umfasst, wobei der dritte Temperaturbereich $T_3$ oberhalb des zweiten Temperaturbereichs $T_2$ liegt und der zweite Temperaturbereich $T_2$ oberhalb des ersten Temperaturbereichs $T_1$ liegt.

**3.** Verfahren nach Anspruch 1 oder 2, wobei der erste Temperaturbereich $T_1$ 140 bis 180 °C ist, bevorzugt 150 bis 170 °C, weiter bevorzugt 155 bis 165 °C.

**4.** Verfahren nach einem der Ansprüche 1 bis 3, wobei der finale Temperaturbereich $T_f$ >180 bis 250°C, bevorzugt >170 bis 250 °C, weiter bevorzugt >165 bis 250 °C, beträgt, wobei bevorzugt der zweite Temperaturbereich $T_2$ >180 bis 200 °C, bevorzugt >170 bis 200 °C, weiter bevorzugt >165 bis 200 °C, und der dritte Temperaturbereich $T_3$ >200 bis 250 °C, bevorzugt >200 bis 230 °C, beträgt.

**5.** Verfahren nach einem der Ansprüche 1 bis 4, wobei im ersten Temperaturbereich $T_1$ gemäß (b) 80 bis 95 Gewichts-% der Polyisocyanatzusammensetzung (i), bezogen auf die Gesamtmenge der Polyisocyanatzusammensetzung (i), zugegeben werden.

**6.** Verfahren nach einem der Ansprüche 1 bis 5, wobei im finalen Temperaturbereich $T_f$ 5 bis 20 Gewichts-% der Polyisocyanatzusammensetzung (i), bezogen auf die Gesamtmenge der Polyisocyanatzusammensetzung (i), zugegeben werden, wobei bevorzugt im zweiten Temperaturbereich $T_2$ 5 bis 20 Gewichts-% der Polyisocyanatzusammensetzung (i), und im dritten Temperaturbereich $T_3$ optional 0 bis 10 Gewichts-%, bevorzugt 0 Gewichts-%, der Polyisocyanatzusammensetzung (i), jeweils bezogen auf die Gesamtmenge der Polyisocyanatzusammensetzung (i), zugegeben werden.

**7.** Verfahren nach einem der Ansprüche 1 bis 6, wobei die Katalysatorzusammensetzung (iii) mindestens eine ionische Flüssigkeit umfasst, wobei die ionische Flüssigkeit bevorzugt ein heterozyklisches Kation oder ein Ammoniumkation, weiter bevorzugt ein Kation ausgewählt aus der Gruppe bestehend aus Pyridiniumionen, Pyrazolinium-, Pyrazoliumionen, Imidazolinium, Imidazolium und Ammonium, umfasst und ein entsprechendes Anion, welches bevorzugt ausgewählt ist aus der Gruppe der Halogenide, weiter bevorzugt ausgewählt aus der Gruppe bestehend aus Chlorid, Bromid und Jodid, weiter bevorzugt Chlorid; wobei die mindestens eine ionische Flüssigkeit weiter bevorzugt ausgewählt ist aus der Gruppe bestehend aus 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-Ethyl-2,3-dimethylimidazoliumbromid (EDMIM-Br) und 1-(2-hydroxyethyl)-3-methylimidazolium chlorid (HEMIM-Cl).

**8.** Verfahren nach einem der Ansprüche 1 bis 7, wobei die Mengen an Polyisocyanatzusammensetzung (i), Epoxidzusammensetzung (ii) und Katalysatorzusammensetzung (iii) 95 Gewichts-%, bevorzugt 98 Gewichts-%, der gesamten Reaktionsmenge aller vorhandenen Stoffe darstellen.

**9.** Thermoplastisches Polymer erhalten oder erhältlich nach einem Verfahren gemäß einem der Ansprüche 1 bis 8.

**10.** Thermoplastisches Polymer, erhalten oder erhältlich durch Umsetzung mindestens der Komponenten (i) bis (ii)

i) eine Polyisocyanatzusammensetzung umfassend mindestens ein Diisocyanat;
ii) eine Epoxidzusammensetzung umfassend mindestens ein Diepoxid;

in Gegenwart einer Katalysatorzusammensetzung (iii); wobei

a) bei einer Temperatur in einem ersten Temperaturbereich ($T_1$) Epoxidzusammensetzung (ii) und Katalysatorzusammensetzung (iii) in Mischung vorgelegt werden;
b) unter Beibehaltung einer ersten Temperatur zumindest anteilig die Polyisocyanatzusammensetzung (i) zugegeben wird;
c) die Temperatur auf eine Temperatur in einem finalen Temperaturbereich ($T_f$) erhöht wird;
d) im finalen Temperaturbereich die Zugabe der verbliebenen Polyisocyanatzusammensetzung (i) erfolgt;

unter Erhalt eines thermoplastischen Polymers.

**11.** Thermoplastisches Polymer nach Anspruch 10, wobei die Katalysatorzusammensetzung (iii) mindestens eine ionische Flüssigkeit umfasst, wobei die ionische Flüssigkeit bevorzugt ein heterozyklisches Kation oder ein Ammoniumkation, weiter bevorzugt ein Kation ausgewählt aus der Gruppe bestehend aus Pyridiniumionen, Pyrazolinium-, Pyrazoliumionen, Imidazolinium, Imidazolium und Ammonium, umfasst und ein entsprechendes Anion, welches bevorzugt ausgewählt ist aus der Gruppe der Halogenide, weiter bevorzugt ausgewählt aus der Gruppe bestehend aus Chlorid, Bromid und Jodid, weiter bevorzugt Chlorid<, wobei die mindestens eine ionische Flüssigkeit weiter bevorzugt ausgewählt ist aus der Gruppe bestehend aus 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-Ethyl-2,3-dimethylimidazolium-bromid (EDMIM-Br) und 1-(2-hydroxyethyl)-3-methylimidazolium chlorid (HEMIM-Cl).

**12.** Thermoplastisches Polymer nach Anspruch 10 oder 11, wobei die Mengen an Polyisocyanatzusammensetzung (i), Epoxidzusammensetzung (ii) und Katalysatorzusammensetzung (iii) 95 Gewichts-%, bevorzugt 98 Gewichts-%, der gesamten Reaktionsmenge aller vorhandenen Stoffe darstellen.

**13.** Thermoplastisches Polymer nach einem der Ansprüche 10 bis 12, wobei das thermoplastische Polymer eine zahlenmittlere Molmasse $M_n$ größer als 10000 g/mol, bevorzugt größer 15000 g/mol, weiter bevorzugt größer 18000 g/mol aufweist.

**14.** Thermoplastisches Polymer nach einem der Ansprüche 10 bis 13, wobei die Polydispersität kleiner 4, bevorzugt kleiner 3,5, ist, wobei die Polydispersität PI der Quotient aus der gewichtsmittleren Molmasse $M_w$ und der zahlenmittleren Molmasse $M_n$ des thermoplastischen Polymers ist.

**15.** Verwendung eines thermoplastischen Polymers erhalten oder erhältlich nach dem Verfahren gemäß einem der Ansprüche 1 bis 8 oder des thermoplastischen Polymers gemäß einem der Ansprüche 10 bis 14 für die Herstellung einer Faser oder eines Formkörpers durch Spritzguss, Kalandrieren, Pulversintern, Lasersintern, Schmelzpressen oder Extrusion; oder als Modifizierer für thermoplastisches Material.

## Claims

**1.** A process for preparing a thermoplastic polymer by reacting at least components (i) to (ii)

i) a polyisocyanate composition comprising at least one diisocyanate;
ii) an epoxide composition comprising at least one diepoxide;

in the presence of a catalyst composition (iii); wherein

a) epoxide composition (ii) and catalyst composition (iii) are initially charged as a mixture at a temperature in a first temperature range ($T_1$);
b) the polyisocyanate composition (i) is at least partially added while maintaining a temperature in the first temperature range $T_1$;
c) the temperature is raised to a temperature in a final temperature range ($T_f$);
d) the remaining polyisocyanate composition (i) is added in the final temperature range.

**2.** The process according to claim 1, wherein the final temperature range $T_f$ comprises a second temperature range range $T_2$ and a third temperature range $T_3$, wherein the third temperature range $T_3$ is above the second temperature range $T_2$ and the second temperature range $T_2$ is above the first temperature range $T_1$.

**3.** The process according to claim 1 or 2, wherein the first temperature range $T_1$ is 140 to 180°C, preferably 150 to 170°C, further preferably 155 to 165°C.

**4.** The process according to any of claims 1 to 3, wherein the final temperature range $T_f$ is >180 to 250°C, preferably >170 to 250°C, further preferably >165 to 250°C, wherein preferentially the second temperature range $T_2$ is >180 to 200°C, preferably >170 to 200°C, further preferably >165 to 200°C, and the third temperature range $T_3$ is >200 to 250°C, preferably >200 to 230°C.

**5.** The process according to any of claims 1 to 4, wherein in the first temperature range $T_1$ according to (b) 80% to 95% by weight of the polyisocyanate composition (i), based on the total amount of the polyisocyanate composition (i), is added.

**6.** The process according to any of claims 1 to 5, wherein in the final temperature range $T_f$ 5% to 20% by weight of the polyisocyanate composition (i), based on the total amount of the polyisocyanate composition (i), is added, wherein preferably in the second temperature range $T_2$ 5% to 20% by weight of the polyisocyanate composition (i), and in the third temperature range $T_3$ optionally 0% to 10% by weight, preferably 0% by weight, of the polyisocyanate composition (i), in each case based on the total amount of the polyisocyanate composition (i), are added.

**7.** The process according to any of claims 1 to 6, wherein the catalyst composition (iii) comprises at least one ionic liquid, wherein the ionic liquid preferably comprises a heterocyclic cation or an ammonium cation, further preferably a cation selected from the group consisting of pyridinium ions, pyrazolinium ions, pyrazolium ions, imidazolinium, imidazolium and ammonium, and a corresponding anion which is preferably selected from the group of the halides, further preferably selected from the group consisting of chloride, bromide and iodide, further preferably chloride; wherein the at least one ionic liquid is further preferably selected from the group consisting of 1-ethyl-3-methylimidazolium bromide (EMIM-Br), 1-benzyl-3-methylimidazolium chloride (BEMIM-Cl), 1-butyl-1-methylpiperidinium chloride (BMPM-Cl), 1-ethyl-2,3-dimethylimidazolium bromide (EDMIM-Br) and 1-(2-hydroxyethyl)-3-methylimidazolium chloride (HEMIM-Cl).

**8.** The process according to any of claims 1 to 7, wherein the amounts of polyisocyanate composition (i), epoxide composition (ii) and catalyst composition (iii) constitute 95% by weight, preferably 98% by weight, of the total reaction amount of all substances present.

**9.** A thermoplastic polymer obtained or obtainable by a process according to any of claims 1 to 8.

**10.** A thermoplastic polymer obtained or obtainable by reacting at least components (i) to (ii)

i) a polyisocyanate composition comprising at least one diisocyanate;
ii) an epoxide composition comprising at least one diepoxide;

in the presence of a catalyst composition (iii); wherein

a) epoxide composition (ii) and catalyst composition (iii) are initially charged as a mixture at a temperature in a first temperature range ($T_1$);
b) the polyisocyanate composition (i) is at least partially added while maintaining a first temperature;
c) the temperature is raised to a temperature in a final temperature range ($T_f$);
d) the remaining polyisocyanate composition (i) is added in the final temperature range;

to give a thermoplastic polymer.

**11.** The thermoplastic polymer according to claim 10, wherein the catalyst composition (iii) comprises at least one ionic liquid, wherein the ionic liquid preferably comprises a heterocyclic cation or an ammonium cation, further preferably a cation selected from the group consisting of pyridinium ions, pyrazolinium ions, pyrazolium ions, imidazolinium, imidazolium and ammonium, and a corresponding anion which is preferably selected from the group of the halides, further preferably selected from the group consisting of chloride, bromide and iodide, further preferably chloride<, wherein the at least one ionic liquid is further preferably selected from the group consisting of 1-ethyl-3-methylimidazolium bromide (EMIM-Br), 1-benzyl-3-methylimidazolium chloride (BEMIM-Cl), 1-butyl-1-methylpiperidinium chloride (BMPM-Cl), 1-ethyl-2,3-dimethylimidazolium bromide (EDMIM-Br) and 1-(2-hydroxyethyl)-3-methylimidazolium chloride (HEMIM-Cl).

**12.** The thermoplastic polymer according to claim 10 or 11, wherein the amounts of polyisocyanate composition (i), epoxide composition (ii) and catalyst composition (iii) constitute 95% by weight, preferably 98% by weight, of the total reaction amount of all substances present.

**13.** The thermoplastic polymer according to any of claims 10 to 12, wherein the thermoplastic polymer has a number-average molar mass $M_n$ of greater than 10 000 g/mol, preferably greater than 15 000 g/mol, further preferably greater than 18 000 g/mol.

**14.** The thermoplastic polymer according to any of claims 10 to 13, wherein the polydispersity is less than 4, preferably less than 3.5, wherein the polydispersity PI is the quotient of the weight-average molar mass $M_w$ and the number-average molar mass $M_n$ of the thermoplastic polymer.

**15.** The use of a thermoplastic polymer obtained or obtainable by the process according to any of claims 1 to 8 or of the thermoplastic polymer according to any of claims 10 to 14 for producing a fiber or a shaped body by injection molding, calendering, powder sintering, laser sintering, melt pressing or extrusion; or as modifier for thermoplastic material.

## Revendications

**1.** Procédé pour la préparation d'un polymère thermoplastique par transformation d'au moins les composants (i) à (ii)

i) une composition de polyisocyanate comprenant au moins un diisocyanate ;
ii) une composition d'époxyde comprenant au moins un diépoxyde ;

en présence d'une composition de catalyseur (iii) ; dans lequel

a) la composition d'époxyde (ii) et la composition de catalyseur (iii) en mélange sont chargées à une température dans une première plage de températures ($T_1$) ;
b) la composition de polyisocyanate (i) est ajoutée au moins partiellement avec maintien d'une température dans une première plage de températures $T_1$ ;
c) la température est élevée à une température dans une plage de températures finale ($T_f$) ;
d) l'ajout de la composition de polyisocyanate (i) restante est réalisé dans la plage de températures finale.

**2.** Procédé selon la revendication 1, la plage de températures finale $T_f$ comprenant une deuxième plage de températures $T_2$ et une troisième plage de températures $T_3$, la troisième plage de températures $T_3$ se situant au-dessus de la deuxième plage de températures $T_2$ et la deuxième plage de températures $T_2$ se situant au-dessus de la première plage de températures $T_1$.

**3.** Procédé selon la revendication 1 ou 2, la première plage de températures $T_1$ étant de 140 à 180 °C, préférablement de 150 à 170 °C, encore plus préférablement de 155 à 165 °C.

**4.** Procédé selon l'une quelconque des revendications 1 à 3, la plage de températures finale $T_f$ étant > 180 à 250 °C, préférablement > 170 à 250 °C, encore plus préférablement > 165 à 250 °C, préférablement la deuxième plage de températures $T_2$ étant > 180 à 200 °C, préférablement > 170 à 200 °C, encore plus préférablement > 165 à 200 °C, et la troisième plage de températures $T_3$ étant > 200 à 250 °C, préférablement > 200 à 230 °C.

**5.** Procédé selon l'une quelconque des revendications 1 à 4, dans la première plage de températures $T_1$ selon (b), 80 à 95 % en poids de la composition de polyisocyanate (i), par rapport à la quantité totale de la composition de polyisocyanate (i) étant ajoutés.

**6.** Procédé selon l'une quelconque des revendications 1 à 5, dans la plage de températures finale $T_f$, 5 à 20 % en poids de la composition de polyisocyanate (i), par rapport à la quantité totale de la composition de polyisocyanate (i), étant ajoutés, préférablement dans la deuxième plage de températures $T_2$, 5 à 20 % en poids de la composition de polyisocyanate (i), et dans la troisième plage de températures $T_3$ éventuellement 0 à 10 % en poids, préférablement 0 % en poids, de la composition de polyisocyanate (i), étant ajoutés, à chaque fois par rapport à la quantité totale de la composition de polyisocyanate (i).

**7.** Procédé selon l'une quelconque des revendications 1 à 6, la composition de catalyseur (iii) comprenant au moins un liquide ionique, le liquide ionique comprenant préférablement un cation hétérocyclique ou un cation ammonium, plus préférablement un cation choisi dans le groupe constitué par des ions pyridinium, des ions pyrazolinium, des ions pyrazolium, imidazolinium, imidazolium et ammonium, et un anion correspondant, qui est préférablement choisi dans le groupe des halogénures, plus préférablement choisi dans le groupe constitué par chlorure, bromure et iodure, plus préférablement chlorure ; l'au moins un liquide ionique étant plus préférablement choisi dans le groupe constitué par le bromure de 1-éthyl-3-méthylimidazolium (EMIM-Br), le chlorure de 1-benzyl-3-méthylimidazolium (BEMIM-Cl), le chlorure de 1-butyl-1-méthylpipéridinium (BMPM-Cl), le bromure de 1-éthyl-2,3-diméthylimidazolium (EDMIM-Br) et le chlorure de 1-(2-hydroxyéthyl)-3-méthylimidazolium (HEMIM-Cl).

**8.** Procédé selon l'une quelconque des revendications 1 à 7, les quantités de composition de polyisocyanate (i), de composition d'époxyde (ii) et de composition de catalyseur (iii) représentant 95 % en poids, préférablement 98 % en poids de la quantité de réaction totale de toutes les substances présentes.

**9.** Polymère thermoplastique obtenu ou pouvant être obtenu selon un procédé selon l'une quelconque des revendications 1 à 8.

**10.** Polymère thermoplastique, obtenu ou pouvant être obtenu par transformation d'au moins les composants (i) à (ii)

i) une composition de polyisocyanate comprenant au moins un diisocyanate ;
ii) une composition d'époxyde comprenant au moins un diépoxyde ;

en présence d'une composition de catalyseur (iii) ; dans lequel

a) la composition d'époxyde (ii) et la composition de catalyseur (iii) en mélange sont chargées à une température dans une première plage de températures ($T_1$) ;
b) la composition de polyisocyanate (i) est ajoutée au moins partiellement avec maintien d'une première température ;
c) la température est élevée à une température dans une plage de températures finale ($T_f$) ;
d) l'ajout de la composition de polyisocyanate (i) restante est réalisé dans la plage de températures finale ;

avec obtention d'un polymère thermoplastique.

**11.** Polymère thermoplastique selon la revendication 10, la composition de catalyseur (iii) comprenant au moins un liquide ionique, le liquide ionique comprenant préférablement un cation hétérocyclique ou un cation ammonium, plus préférablement un cation choisi dans le groupe constitué par des ions pyridinium, des ions pyrazolinium, des ions pyrazolium, imidazolinium, imidazolium et ammonium, et un anion correspondant, qui est préférablement choisi dans le groupe des halogénures, plus préférablement choisi dans le groupe constitué par chlorure, bromure et iodure, plus préférablement chlorure ; l'au moins un liquide ionique étant plus préférablement choisi dans le groupe constitué par le bromure de 1-éthyl-3-méthylimidazolium (EMIM-Br), le chlorure de 1-benzyl-3-méthylimidazolium (BEMIM-Cl), le chlorure de 1-butyl-1-méthylpipéridinium (BMPM-Cl), le bromure de 1-éthyl-2,3-diméthylimidazolium (EDMIM-Br) et le chlorure de 1-(2-hydroxyéthyl)-3-méthylimidazolium (HEMIM-Cl).

**12.** Polymère thermoplastique selon la revendication 10 ou 11, les quantités de composition de polyisocyanate (i), de composition d'époxyde (ii) et de composition de catalyseur (iii) représentant 95 % en poids, préférablement 98 % en poids de la quantité de réaction totale de toutes les substances présentes.

**13.** Polymère thermoplastique selon l'une quelconque des revendications 10 à 12, le polymère thermoplastique présentant une masse molaire moyenne en nombre $M_n$ supérieure à 10 000 g/mole, préférablement supérieure à 15 000 g/mole, plus préférablement supérieure à 18 000 g/mole.

**14.** Polymère thermoplastique selon l'une quelconque des revendications 10 à 13, la polydispersité étant inférieure à 4, préférablement inférieure à 3,5, la polydispersité PI étant le quotient de la masse molaire moyenne en poids $M_w$ et de la masse molaire moyenne en nombre $M_n$ du polymère thermoplastique.

**15.** Utilisation d'un polymère thermoplastique obtenu ou pouvant être obtenu par le procédé selon l'une quelconque des revendications 1 à 8 ou du polymère thermoplastique selon l'une quelconque des revendications 10 à 14 pour la préparation d'une fibre ou d'un corps moulé par moulage par injection, par calandrage, par frittage de poudre, par frittage laser, par pressage à l'état fondu ou par extrusion ; ou en tant que modificateur pour une matière thermoplastique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102014226838 A1
- WO 2015173111 A1
- WO 2015173110 A1
- US 20140121299 A
- WO 2014076024 A1
- EP 2018053612 W
- DE 10202838 A1


### In der Beschreibung aufgeführte Nicht-Patentliteratur


- *Angew. Chem.,* 2000, vol. 112, 3926-3945
- *CHEMICAL ABSTRACTS,* 1675-54-3